(19) Europäisches Patentamt
European Patent Office
Office européen des brevets

(11) **EP 4 365 216 A1**

(12) **EUROPEAN PATENT APPLICATION**

(43) Date of publication:
**08.05.2024 Bulletin 2024/19**

(21) Application number: **22205637.6**

(22) Date of filing: **04.11.2022**

(51) International Patent Classification (IPC):
***C08G 10/00*** *(2006.01)* ***C08J 5/22*** *(2006.01)*

(52) Cooperative Patent Classification (CPC):
**C08G 10/00; C08J 5/2262;** C08J 2361/18; H01M 8/1039

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ecole Polytechnique Fédérale de Lausanne (EPFL)**
**1015 Lausanne (CH)**

(72) Inventors:
- **HU, Xile**
  **1162 ST-PREX (CH)**
- **CHEN, Nanjun**
  **1004 LAUSANNE (CH)**
- **WU, Xingyu**
  **1024 ECUBLENS VD (CH)**

(74) Representative: **Schulz Junghans Patentanwälte PartGmbB**
**Großbeerenstraße 71**
**10963 Berlin (DE)**

(54) **FLUORINATED POLYAROMATICS WITH LINEAR, BRANCHED OR CROSSLINKED STRUCTURE FOR ANION EXCHANGE MEMBRANES AND IONOMERS**

(57) The present specification relates to a fluorinated polyaromatic polymer comprising
• at least one fluorinated unit FU of formula I

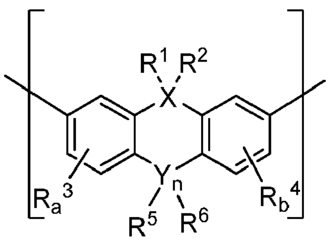
(I)

and
• at least one cationic unit CU of formula B or C

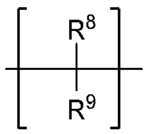
(B),
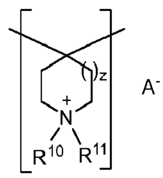
(C).

EP 4 365 216 A1

## Description

The present invention relates to fluorinated polyaromatics polymers for use as anion exchange membranes and ionomers.

### Background

Anion exchange membranes (AEMs) and ionomers are critical materials for many applications, such as anion exchange membrane fuel cells (AEMFCs), anion exchange membrane water electrolyzers (AEMWEs), CO2 electrolyzers, acid/base recycle and so on. However, the development of AEMs and ionomers with desirable alkaline and oxidation stabilities, mechanical properties and dimensional stabilities are very challenging.

Yan et al. 2017 (WO 2017 172824 A1)[1] and Bae et al. 2015 (US 11236196 B2)[2] claim polyaromatic polymers with trifluoromethyl ketone for use in anion exchange membrane and ionomers. However, the fluorine content in the claimed polymers is below 5% which results in less improved hydrophobicity.

Wu *et al.* 2022[3] and Chen *et al.* 2019[4] reported branched polyaromatics and crosslinked polyaromatics, respectively, for use as anion exchange membrane, however, the reported polyaromatic polymers do not contain fluorine elements and thus do show less hydrophobicity.

Based on the above-mentioned state of the art, the objective of the present invention is to provide means and methods to fluorinated polyaromatics with linear, branched or crosslinked structure to be used in anion exchange membranes and ionomers with improved hydrophobicity which leads to improved mechanical properties. This objective is attained by the subject-matter of the independent claims of the present specification, with further advantageous embodiments described in the dependent claims, examples, figures and general description of this specification.

### Summary of the Invention

A first aspect of the invention relates to a fluorinated polyaromatic polymer comprising

- at least one fluorinated unit FU of formula (I)

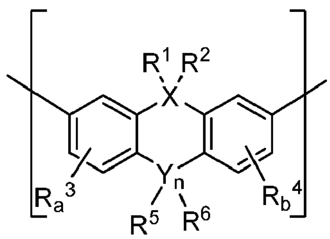

(I)

wherein

X is C or N,

Y is C,

$R^1$, $R^2$, $R^5$ and $R^6$ are independently selected from

- $-(CH_2)_p-(CF_2)_q-CF_3$ ,

- 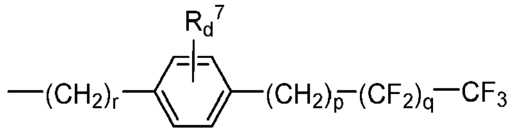 ,

- H,

- $-C_1-C_{10}$ alkyl, wherein the $-C_1-C_{10}$ alkyl is substituted or unsubstituted, particularly $-C_1-C_6$ alkyl,

- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

wherein at least one of $R^1$, $R^2$, $R^5$ and $R^6$ is

- $-(CH_2)_p-(CF_2)_q-CF_3$ or

- 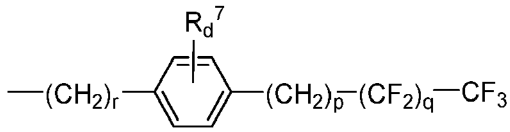,

$R_a^3$, $R_b^4$ and $R_d^7$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

a and b are independently 0, 1, 2, or 3, particularly 0 or 1, more particularly 0,

d is 0, 1, 2, 3 or 4, particularly 0 or 1, more particularly 0,

n is 0 or 1,

r is , 1, 2, 3, 4, 5 or 6, particularly, 1, 2, or 3, more particularly 1 or 2,

p is independently between 1 and 20, particularly 1 and 15, more particularly 1 and 9, and

q is independently between 0 and 20, particularly 0 and 15, more particularly 0 and 9,

and

- at least one cationic unit CU of formula (B) or (C)

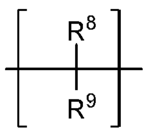 (B), 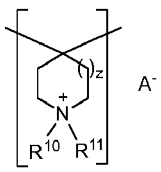 (C),

wherein

$R^8$ is a partially or fully fluorinated $C_1-C_6$ alkyl, particularly $CF_3$,
$R^9$ is selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,
- $-(CH_2)_s-N(R^{12})_2$,
- $-(CH_2)_s-NHR^{12}$,
- $-(CH_2)_s-N^+(R^{12})_3$,

  wherein $R^{12}$ is independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl, s is between 0 and 20
- $-Ph-R_f^{13}$,

$R^{10}$ and $R^{11}$ are independently selected from

- H
- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

or $R^{10}$ and $R^{11}$ are connected to each other to form a cycloalkyl comprising 4 to 10 C atoms,
z is 0 or 1,
$A^-$ is an anion.

A second aspect of the invention relates to a method for preparing a fluorinated polyaromatic polymer comprising one or more linear units LU comprising reacting at least one fluorinated unit precursor FUP and at least one cationic unit precursor CUP and optionally at least one bifunctional aromatic moiety precursor BAP.

A third aspect of the invention relates to a method for preparing a fluorinated polyaromatic polymer comprising a branched unit BU comprising three or more linear units LU connected through a branching unit reagent BUR, comprising reacting at least one fluorinated unit precursor FUP and optionally at least one cationic unit precursor CUP and optionally at least one bifunctional aromatic moiety precursor BAP and a branching unit precursor BUP.

A fourth aspect of the invention relates to a method for preparing a fluorinated polyaromatic polymer comprising a crosslinking unit CU comprising two or more linear units LU connected through one or more crosslinkers CL comprising

- reacting at least one fluorinated unit precursor FUP and at least one cationic unit precursor CUP and optionally at least one bifunctional aromatic moiety precursor BAP yielding an intermediate polymer, and
- reacting the intermediate polymer with at least one crosslinking unit precursor CLU.

## Terms and definitions

For purposes of interpreting this specification, the following definitions will apply and whenever appropriate, terms used in the singular will also include the plural and vice versa. In the event that any definition set forth below conflicts with any document incorporated herein by reference, the definition set forth shall control.

The terms "comprising", "having", "containing", and "including", and other similar forms, and grammatical equivalents thereof, as used herein, are intended to be equivalent in meaning and to be open-ended in that an item or items following any one of these words is not meant to be an exhaustive listing of such item or items, or meant to be limited to only the listed item or items. For example, an article "comprising" components A, B, and C can consist of (i.e., contain only) components A, B, and C, or can contain not only components A, B, and C but also one or more other components. As such, it is intended and understood that "comprises" and similar forms thereof, and grammatical equivalents thereof, include disclosure of embodiments of "consisting essentially of" or "consisting of."

Where a range of values is provided, it is understood that each intervening value, to the tenth of the unit of the lower limit, unless the context clearly dictates otherwise, between the upper and lower limit of that range and any other stated or intervening value in that stated range, is encompassed within the disclosure, subject to any specifically excluded limit in the stated range. Where the stated range includes one or both of the limits, ranges excluding either or both of those included limits are also included in the disclosure.

Reference to "about" a value or parameter herein includes (and describes) variations that are directed to that value or parameter per se. For example, description referring to "about X" includes description of "X."

As used herein, including in the appended claims, the singular forms "a", "or" and "the" include plural referents unless the context clearly dictates otherwise.

"And/or" where used herein is to be taken as specific recitation of each of the two specified features or components with or without the other. Thus, the term "and/or" as used in a phrase such as "A and/or B" herein is intended to include "A and B," "A or B," "A" (alone), and "B" (alone). Likewise, the term "and/or" as used in a phrase such as "A, B, and/or C" is intended to encompass each of the following aspects: A, B, and C; A, B, or C; A or C; A or B; B or C; A and C; A and B; B and C; A (alone); B (alone); and C (alone).

Unless defined otherwise, all technical and scientific terms used herein have the same meaning as commonly understood by one of ordinary skill in the art (e.g., in cell culture, molecular genetics, nucleic acid chemistry, hybridization techniques and biochemistry, organic synthesis). Standard techniques are used for chemical methods.

The term *fluorinated polyaromatic polymer* in the context of the present specification relates to a polymer that comprises at least one fluorinated unit FU and at least one cationic unit CU and optionally at least one bifunctional aromatic moiety BA, wherein the polymer comprises or consists of a linear unit LU comprising at least one fluorinated unit FU and at least one cationic unit CU and optionally at least one bifunctional aromatic moiety BA, or the polymer comprises or consists of a branched unit BU comprising three or more linear units LU connected through at least one branching unit reagent BUR or the polymer comprises or consists of a crosslinking unit CLU comprising two or more linear units LU connected through at least one crosslinker CL, wherein the crosslinker CL connects two BAs or two CUs of two linear units LU.

The term *fluorinated unit* or *FU* in the context of the present specification relates to a moiety of formula (I) as described below.

The term *cationic unit* or CU in the context of the present specification relates to a moiety of formula B or of formula C as described below. The cationic groups within the polymer allow for the transport of anions between an anode and a cathode in an electrochemical device. Non-limiting examples for anions are $OH^-$, $CO_3^{2-}$, $Br^-$ or $Cl^-$. The cationic unit separates the fluorinated unit from the bifunctional aromatic moiety or from each other.

The term *bifunctional aromatic moiety* or BA in the context of the present specification relates to a moiety that comprises 2 to 5, particularly 2 to 3, cyclic hydrocarbon moieties. Non-limiting examples are biphenyl, terphenyl (particularly para- or meta-terphenyl), 1,1'-methylenedibenzene, (1-methyl-1-phenyl-ethyl)benzene, 2-phenylethylbenzene, 9,9-dimethylfluorene and 9,9-dibutylfluorene. At least one, particularly all, of the cyclic hydrocarbon moieties are aromatic.

The term *unit* in the context of the present specification as used in *linear unit, branched unit* or *crosslinked unit* relates to a repetitive part in a polymer. The *linear unit, branched unit* or *crosslinked unit* form random polymers. In case of the *linear unit* the polymer is formed by $[FU\text{-}CU]_m$ $BA\text{-}CU]_n$ or [FU-CU] parts wherein m and n relates to the molar ratio of these parts, however, the order within the *linear unit* is randomly formed, e.g. -FU-CU-FU-CU-BA-CU-BA-CU-FU-CU-BA-CU-BA-CU- BA-CU-.

The terms *$C_1$-$C_{10}$ alkyl, $C_1$-$C_{10}$ alkenyl and $C_1$-$C_{10}$ alkynyl* in the context of the present specification relates to a saturated linear or branched hydrocarbon or unsaturated linear or branched hydrocarbon having 1 to 10 carbon atoms. Non-limiting examples for a $C_1$-$C_{10}$ alkyl include n-hexyl, n-heptyl, n-decanyl, 3-methylbut-2-enyl, 2-methylbut-3-enyl, 3-methylbut-3-enyl, n-pentyl, 2-methylbutyl, 3-methylbutyl, 1,1-dimethylpropyl, 1,2-dimethylpropyl, 1,2-dimethylpropyl, pent-4-inyl, 3-methyl-2-pentyl, and 4-methyl-2-pentyl, n-hexyl, n-heptyl, n-decanyl, n-butyl, isobutyl, n-propyl, isopropyl, ethyl, methyl.

The term *$C_1$-$C_6$ alkyl, $C_1$-$C_6$ alkenyl and $C_1$-$C_6$ alkynyl* in the context of the present specification relates to a saturated linear or branched hydrocarbon or unsaturated linear or branched hydrocarbon having 1, 2, 3, 4, 5 or 6 carbon atoms. Non-limiting examples for a $C_1$-$C_6$ alkyl include the examples given for $C_1$-$C_{10}$ alkyl above. In certain embodiments, a $C_5$ alkyl is a pentyl or cyclopentyl moiety and a $C_6$ alkyl is a hexyl or cyclohexyl moiety.

The term *substituted alkyl* in its broadest sense refers to an alkyl as defined above in the broadest sense, which is covalently linked to an atom that is not carbon or hydrogen, particularly to an atom selected from N, F, Cl, Br and I, which itself may be -if applicable- linked to one or several other atoms of this group, or to hydrogen, or to an unsaturated or saturated hydrocarbon (alkyl or aryl in their broadest sense). In a narrower sense, *substituted alkyl* refers to an alkyl as defined above in the broadest sense that is substituted in one or several carbon atoms by groups selected from amine $NH_2$, alkylamine NHR, imide NH, alkylimide NR, amino(carboxyalkyl) NHCOR or NRCOR, fluoride F, chloride Cl, bromide Br, iodide I, wherein the R substituent as used in the current paragraph, different from other uses assigned to R in the body of the specification, is itself an unsubstituted or substituted $C_1$ to $C_6$ alkyl unless otherwise specified.

## Detailed Description of the Invention

The first aspect of the invention relates to a fluorinated polyaromatic polymer comprising

- at least one fluorinated unit FU of formula (I)

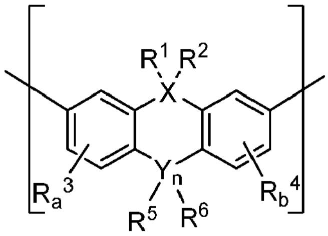

(I)

wherein

X is C or N,
Y is C,
$R^1$, $R^2$, $R^5$ and $R^6$ are independently selected from

- $-(CH_2)_p-(CF_2)_q-CF_3$,

- 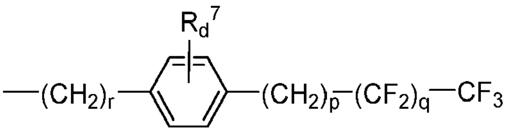,

- H,
- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

wherein at least one of $R^1$, $R^2$, $R^5$ and $R^6$ is

- $-(CH_2)_p-(CF_2)_q-CF_3$ or

- 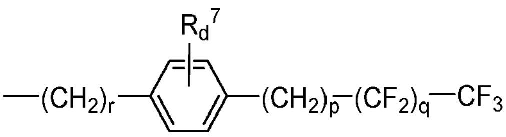.

$R_a^3$, $R_b^4$ and $R_d^7$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

a and b are independently 0, 1, 2, or 3, particularly 0 or 1, more particularly 0,
d is 0, 1, 2, 3 or 4, particularly 0 or 1, more particularly 0,
n is 0 or 1,
r is , 1, 2, 3, 4, 5 or 6, particularly, 1, 2, or 3, more particularly 1 or 2,
p is independently between 1 and 20, particularly 1 and 15, more particularly 1 and 9, and
q is independently between 0 and 20, particularly 0 and 15, more particularly 0 and 9,

and

- at least one cationic unit CU of formula B or C

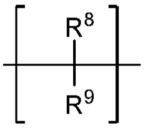 (B), 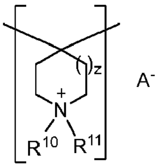 (C),

$R^8$ is a partially or fully fluorinated $C_1$-$C_6$ alkyl, particularly $CF_3$,
$R^9$ is selected from

- -$C_1$-$C_{10}$ alkyl, wherein the -$C_1$-$C_{10}$ alkyl is substituted or unsubstituted, particularly -$C_1$-$C_6$ alkyl,
- -$C_2$-$C_{10}$ alkenyl, wherein the -$C_2$-$C_{10}$ alkenyl is substituted or unsubstituted, particularly -$C_2$-$C_6$ alkenyl,
- -$C_2$-$C_{10}$ alkynyl, wherein the -$C_2$-$C_{10}$ alkynyl is substituted or unsubstituted, particularly $C_2$-$C_6$ alkynyl,
- $-(CH_2)_s$-$N(R^{12})_2$,
- $-(CH_2)_s$-$NHR^{12}$,
- $-(CH_2)_s$-$N^+(R^{12})_3$,
  wherein $R^{12}$ is independently selected from

  - -$C_1$-$C_{10}$ alkyl, wherein the -$C_1$-$C_{10}$ alkyl is substituted or unsubstituted, particularly -$C_1$-$C_6$ alkyl,
  - -$C_2$-$C_{10}$ alkenyl, wherein the -$C_2$-$C_{10}$ alkenyl substituted or unsubstituted, particularly -$C_2$-$C_6$ alkenyl,
  - -$C_2$-$C_{10}$ alkynyl, wherein the -$C_2$-$C_{10}$ alkynyl is substituted or unsubstituted, particularly $C_2$-$C_6$ alkynyl,
    s is between 0 and 20
  - -Ph-$R_f^{13}$,

$R^{10}$ and $R^{11}$ are independently selected from

- H
- -$C_1$-$C_{10}$ alkyl, wherein the -$C_1$-$C_{10}$ alkyl is substituted or unsubstituted, particularly -$C_1$-$C_6$ alkyl,
- -$C_2$-$C_{10}$ alkenyl, wherein the -$C_2$-$C_{10}$ alkenyl is substituted or unsubstituted, particularly -$C_2$-$C_6$ alkenyl,
- -$C_2$-$C_{10}$ alkynyl, wherein the -$C_2$-$C_{10}$ alkynyl is substituted or unsubstituted, particularly $C_2$-$C_6$ alkynyl,

or $R^{10}$ and $R^{11}$ are connected to each other to form a cycloalkyl comprising 4 to 10 C atoms,
z is 0 or 1,
$A^-$ is an anion.

In certain embodiments, the at least one fluorinated unit FU of formula (II)

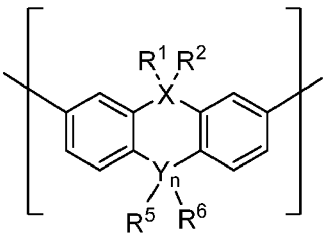 (II)

wherein

X is C or N,
Y is C,
$R^1$, $R^2$, $R^5$ and $R^6$ are independently selected from

- $-(CH_2)_p-(CF_2)_q-CF_3$,

- 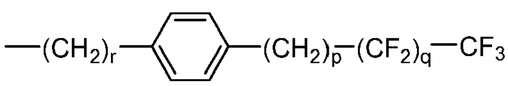 ,

- H,
- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

wherein at least one of $R^1$, $R^2$, $R^5$ and $R^6$ is

- $-(CH_2)_p-(CF_2)_q-CF_3$ or

- 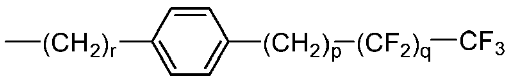 ,

n is 0 or 1,
r is , 1, 2, 3, 4, 5 or 6, particularly, 1, 2, or 3, more particularly 1 or 2,
p is independently between 1 and 20, particularly 1 and 15, more particularly 1 and 9, and
q is independently between 0 and 20, particularly 0 and 15, more particularly 0 and 9.

In certain embodiments, $R^1$, $R^2$, $R^5$ and $R^6$ are independently selected from $-C_1-C_{10}$ alkyl, wherein the $-C_1-C_{10}$ alkyl is substituted or unsubstituted.

In certain embodiments, $R^1$, $R^2$, $R^5$ and $R^6$ are independently selected from $-C_1-C_6$ alkyl, wherein the $-C_1-C_6$ alkyl is substituted or unsubstituted.

In certain embodiments, $R^1$, $R^2$, $R^5$ and $R^6$ are independently selected from $-C_1-C_6$ alkyl, wherein the $-C_1-C_6$ alkyl is unsubstituted.

In certain embodiments z is 1.

In certain embodiments, $R^9$ is selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl.

In certain embodiments, $R^9$ is selected from $-C_1-C_{10}$ alkyl, wherein the $-C_1-C_{10}$ alkyl is substituted or unsubstituted.

In certain embodiments, $R^9$ is selected from $-C_1-C_6$ alkyl, wherein the $-C_1-C_6$ alkyl is substituted or unsubstituted.

In certain embodiments, $R^9$ is selected from $-C_1-C_6$ alkyl, wherein the $-C_1-C_6$ alkyl is unsubstituted.

In certain embodiments, $R^9$ is selected from $-C_1-C_3$ alkyl, wherein the $-C_1-C_3$ alkyl is unsubstituted.

In certain embodiments $R^{10}$ and $R^{11}$ are independently selected from

- H
- $-C_1-C_{10}$ alkyl, wherein the $-C_1-C_{10}$ alkyl is substituted or unsubstituted, particularly $-C_1-C_6$ alkyl.

In certain embodiments $R^{10}$ and $R^{11}$ are independently selected from

- H
- $-C_1-C_6$ alkyl, wherein the $-C_1-C_6$ alkyl is unsubstituted.

In certain embodiments $R^{10}$ and $R^{11}$ are independently selected from

- H
- $-C_1-C_3$ alkyl, wherein the $-C_1-C_3$ alkyl is unsubstituted.

In certain embodiments $R^{10}$ and $R^{11}$ are independently selected from -H and -Me.

In certain embodiments, the fluorinated polyaromatic polymer comprises at least one bifunctional aromatic moiety BA, wherein the BA is independently selected from a moiety comprising 2 to 5, particularly 2 to 3 cyclic hydrocarbon moieties, wherein the BA is unsubstituted or substituted by one or more substituents independently selected from $-C_1-C_{10}$-alkyl, $-C_1-C_{10}$-alkenyl or $-C_1-C_{10}$-alkynyl, particularly $-C_1-C_6$ alkyl, $-C_2-C_6$ alkenyl or $-C_2-C_6$ alkynyl, wherein the one or more substituent is unsubstituted or further substituted with one or more halogen atoms or one or more quaternary

amines.

Additionally to having the fluorinated polyaromatic polymer comprising or consisting of [FU-CU] the fluorinated polyaromatic polymer can comprise the bifunctional aromatic moiety BA.

In certain embodiments, the BA is unsubstituted or substituted by one or more substituents independently selected from -$C_1$-$C_6$ alkyl, wherein the -$C_1$-$C_6$ alkyl is unsubstituted or further substituted with one or more halogen atoms or one or more quaternary amines.

In certain embodiments, the BA is substituted by one or more -$C_1$-$C_6$ alkyl, wherein the one or more -$C_1$-$C_6$ alkyl is further substituted with one or more quaternary amines.

In certain embodiments, the BA is unsubstituted.

In certain embodiments, the fluorinated polyaromatic polymer is ordered in such way, that FU and BA are separated by CU.

In certain embodiments, the fluorinated polyaromatic polymer according to any of the preceding claims, comprising at least one linear unit LU comprising

- the one or more FU and the one or more CU, or
- the one or more FU, the one or more CU and the one or more BA, particularly
- the one or more FU, the one or more CU and the one or more BA,

wherein the LU is arranged $[FU\text{-}CU]_x\text{-}[BA\text{-}CU]_y$,
wherein the ratio of x and y is 1:99 to 50:50.

In certain embodiments, the ratio of x and y is 5:95 to 30:70.

In certain embodiments, the ratio of x and y is 5:95 to 20:80.

In certain embodiments, three or more linear units LU form at least one branched unit BU, wherein the three or more linear units LU are connected through at least one branching unit reagent BUR, wherein the at least one BUR is independently selected from a moiety comprising 3 to 6, cyclic hydrocarbon moieties.

In certain embodiments, two or more linear units LU form at least one crosslinked unit CLU, wherein the two or more linear units LU are crosslinked through at least one crosslinker CL, wherein the at least one crosslinker CL is independently selected from an aliphatic or aromatic quaternary diamine.

The crosslinked unit CLU can crosslink two linear units via two cationic units CU or two bifunctional aromatic moieties BA.

In certain embodiments, the at least one fluorinated unit FU is independently selected from

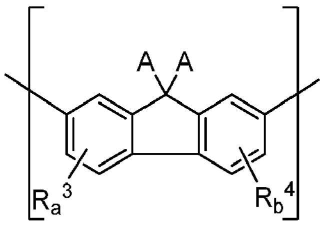
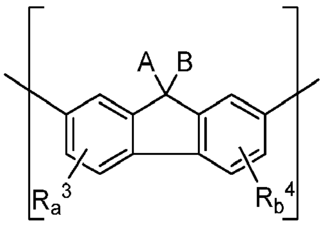
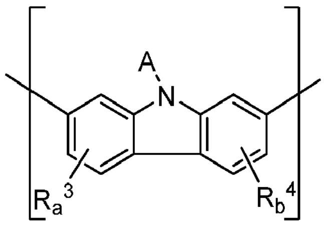

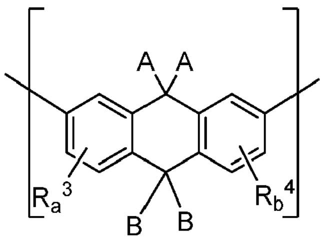
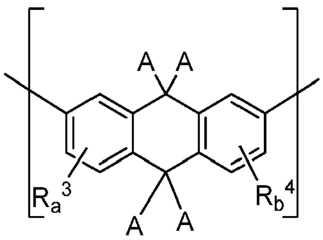
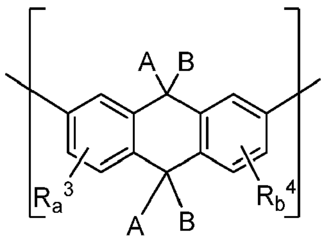

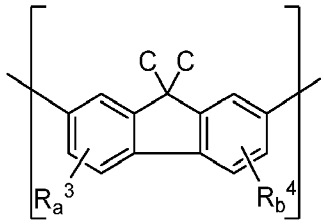

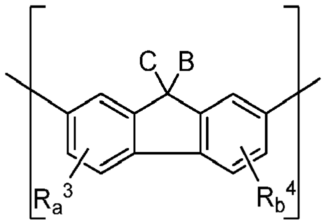

wherein

A is independently selected from $-(CH_2)_p-(CF_2)_q-CF_3$,
B, $R^3$ and $R^4$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

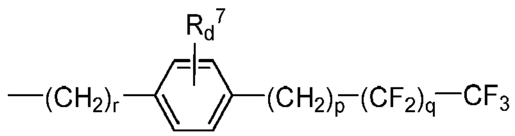
,

wherein $R_d^7$ is independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

d is 0, 1, 2, 3 or 4, C is independently selected from
r is , 1, 2, 3, 4, 5 or 6, particularly 1, 2 or 3, more particularly 1 or 2, p is independently between 1 and 20, particularly 1 and 15, more particularly 1 and 9, and

q is independently between 0 and 20, particularly 0 and 15, more particularly 0 and 9, a and b are independently 0, 1, 2, or 3.

In certain embodiments, the at least one fluorinated unit FU is independently selected from

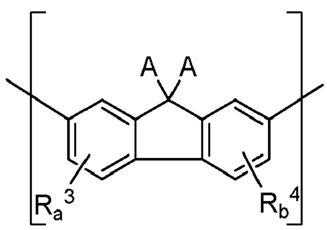

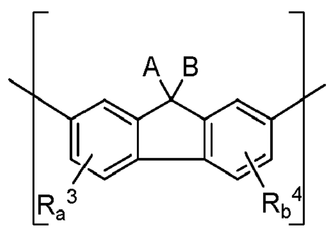

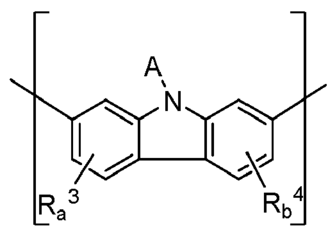

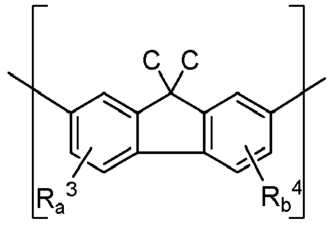

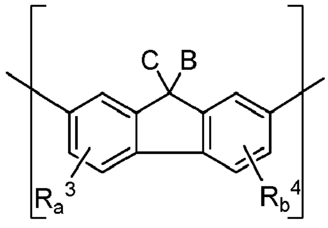

wherein

A is independently selected from $-(CH_2)_p-(CF_2)_q-CF_3$,
B, $R^3$ and $R^4$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

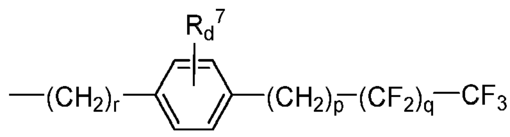
,

wherein $R_d^7$ is independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

C is independently selected from
d is 0, 1, 2, 3 or 4,
r is , 1, 2, 3, 4, 5 or 6, particularly 1, 2 or 3, more particularly 1 or 2,

p is independently between 1 and 20, particularly 1 and 15, more particularly 1 and 9, and
q is independently between 0 and 20, particularly 0 and 15, more particularly 0 and 9, a and b are independently 0, 1, 2, or 3.

In certain embodiments, the at least one fluorinated unit FU is independently selected from

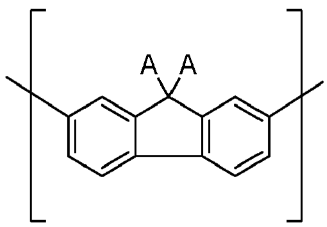
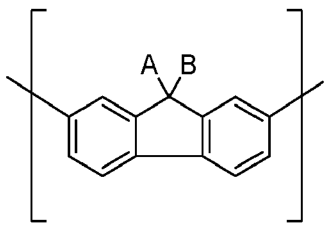
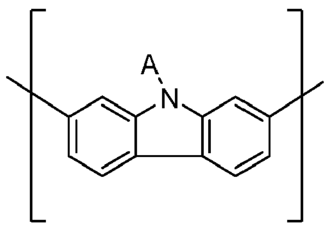

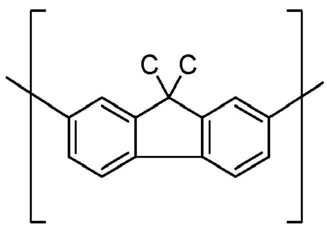
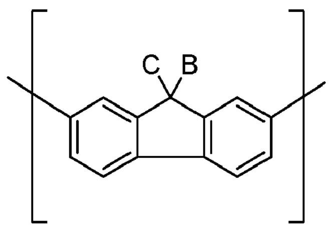

A is independently selected from $-(CH_2)_p-(CF_2)_q-CF_3$,
B is selected from - $-C_1-C_{10}$ alkyl, wherein the $-C_1-C_{10}$ alkyl is substituted or unsubstituted, particularly $-C_1-C_6$ alkyl,

- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

C is independently selected from

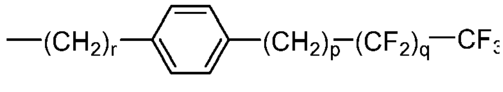

, wherein

r is , 1, 2, 3, 4, 5 or 6, particularly 1, 2 or 3, more particularly 1 or 2,
p is independently between 1 and 20, particularly 1 and 15, more particularly 1 and 9, and
q is independently between 0 and 20, particularly 0 and 15, more particularly 0 and 9.

In certain embodiments, the at least one fluorinated unit FU is independently selected from

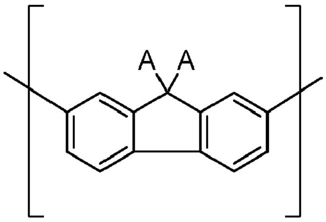

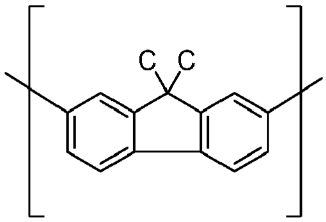

wherein

A is independently selected from $-(CH_2)_p-(CF_2)_q-CF_3$,
C is independently selected from 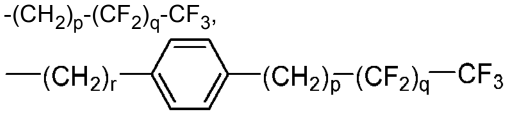 , wherein
r is , 1, 2, 3, 4, 5 or 6, particularly 1, 2 or 3, more particularly 1 or 2,
p is independently between 1 and 20, particularly 1 and 15, more particularly 1 and 9, and
q is independently between 0 and 20, particularly 0 and 15, more particularly 0 and 9.

In certain embodiments, A is $-(CH_2)_p-(CF_2)_q-CF_3$ and

C is

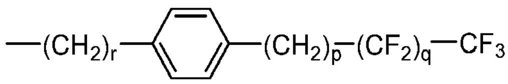
,

wherein
r is , 1, 2, 3, 4, 5 or 6, particularly 1, 2 or 3, more particularly 1 or 2,
p is between 1 and 20, particularly 1 and 15, more particularly 1 and 9, and
q is between 0 and 20, particularly 0 and 15, more particularly 0 and 9.

In certain embodiments, the at least one fluorinated unit FU is

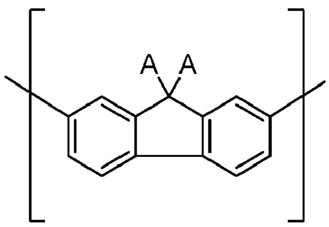

wherein

A is $-(CH_2)_p-(CF_2)_q-CF_3$,
p is between 1 and 20, particularly 1 and 15, more particularly 1 and 9, and
q is between 0 and 20, particularly 0 and 15, more particularly 0 and 9.

In certain embodiments, the at least one bifunctional aromatic moiety BA is independently selected from

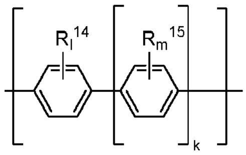 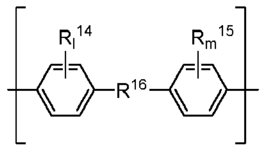 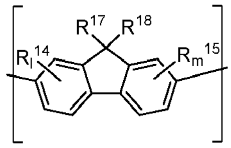

wherein

$R^{14}$, $R^{15}$, $R^{16}$, $R^{17}$ and $R^{18}$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

l and m are independently 0, 1, 2, 3 or 4,
k is 0 to 4, particularly 1 to 4, more particularly 1 or 2.

In certain embodiments, the at least one bifunctional aromatic moiety BA is independently selected from

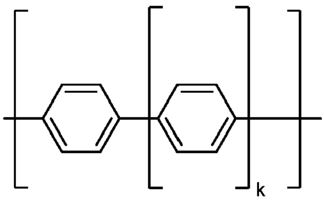 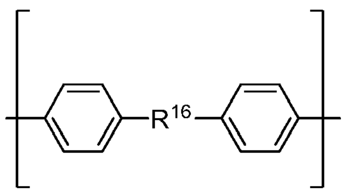 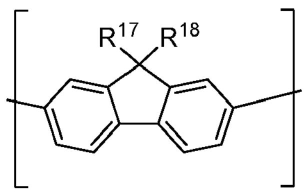

wherein

$R^{16}$, $R^{17}$ and $R^{18}$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

k is 0 to 4, particularly 1 to 4, more particularly 1 or 2.

In certain embodiments, the at least one bifunctional aromatic moiety BA is independently selected from

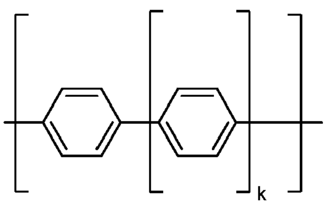 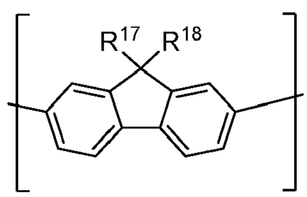

wherein

$R^{17}$ and $R^{18}$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

k is 0 to 4, particularly 1 to 4, more particularly 1 or 2.

In certain embodiments, $R^{17}$ and $R^{18}$ are independently selected from $-C_1-C_{10}$ alkyl, wherein the $-C_1-C_{10}$ alkyl is substituted or unsubstituted.

In certain embodiments, $R^{17}$ and $R^{18}$ are independently selected from $-C_1-C_6$ alkyl, wherein the $-C_1-C_6$ alkyl is substituted with a halogen or quaternary amine.

In certain embodiments, $R^{17}$ and $R^{18}$ are equally selected from $-C_1-C_6$ alkyl, wherein the $-C_1-C_6$ alkyl is substituted with a halogen or quaternary amine.

In certain embodiments, $R^{17}$ and $R^{18}$ are equally selected from $-C_1-C_6$ alkyl, wherein the $-C_1-C_6$ alkyl is substituted with a bromide or $NMe_3^+$ $OH^-$.

In certain embodiments, the at least one bifunctional aromatic moiety BA is independently selected from

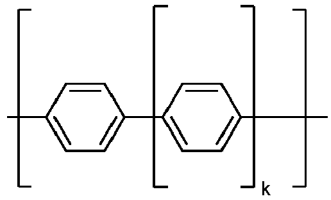

wherein

k is 0 to 4, particularly 1 to 4, more particularly 1 or 2.

In certain embodiments k is 2.

In certain embodiments, the at least one branching unit BU is independently selected from

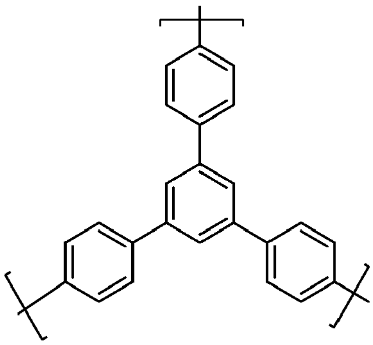

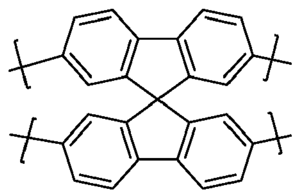

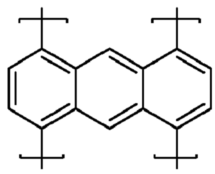

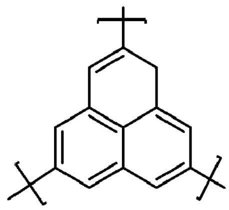

In certain embodiments, the at least one crosslinking unit CLU is independently selected from

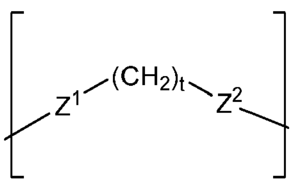

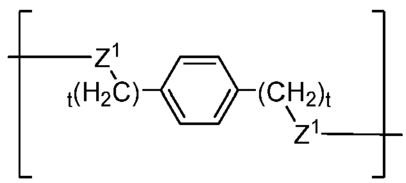

wherein

$Z^1$ is $R^{19}R^{20}$ or $NR^{21}R^{22}$,

$Z^2$ is $R^{19}R^{20}$ or $N+R^{21}R^{22}R^{23}$

$R^{19}$ and $R^{20}$ are independently selected from

- the group of halogens
- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

$R^{21}$, $R^{22}$ and $R^{23}$ are independently selected from

- H
- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

t is between 0 and 20, particularly 0 to 12, more particularly 0 to 6.

In certain embodiments, $R^{19}$ and $R^{20}$ independently selected from the group of halogens or - $C_1-C_{10}$ alkyl, wherein the $-C_1-C_{10}$ alkyl is substituted or unsubstituted.

In certain embodiments, $R^{19}$ and $R^{20}$ independently selected from the group of halogens or - $C_1-C_6$ alkyl, wherein the $-C_1-C_6$ alkyl is substituted or unsubstituted.

In certain embodiments $R^{21}$, $R^{22}$ and $R^{23}$ are independently selected from H or $-C_1-C_{10}$ alkyl, wherein the $-C_1-C_{10}$ alkyl is substituted or unsubstituted.

In certain embodiments $R^{21}$, $R^{22}$ and $R^{23}$ are independently selected from H or $-C_1-C_6$ alkyl, wherein the $-C_1-C_6$ alkyl is substituted or unsubstituted.

In certain embodiments, the fluorine content of the fluorinated polyaromatic polymer is 2.5% to 80%.

In certain embodiments, the fluorine content of the fluorinated polyaromatic polymer is 5% to 60%.

Varying the fluorine content to above 5% increases the hydrophobicity of the polymer resulting in improved mechanical properties, such as improved alkaline and oxidation stability and tensile and swelling strength

In certain embodiments, the fluorine content of the fluorinated polyaromatic polymer is 5 to 30%.

In certain embodiments, the alkaline stability of the fluorinated polyaromatic polymer is above 2000 h in 3 M KOH at 80°C.

In certain embodiments, the oxidation stability of the fluorinated polyaromatic polymer is above 1000 h in 3% $H_2O_2$ Fenton solution.

In certain embodiments, the tensile strength of the fluorinated polyaromatic polymer is above 80 MPa.

In certain embodiments, the swelling strength of the fluorinated polyaromatic polymer is less than 30%.

In certain embodiments, the swelling strength of the fluorinated polyaromatic polymer is less than 15%.

The second aspect of the invention relates to a method for preparing a fluorinated polyaromatic polymer comprising one or more linear units LU comprising reacting at least one fluorinated unit precursor FUP and at least one cationic unit precursor CUP and optionally at least one bifunctional aromatic moiety precursor BAP.

In certain embodiments, the method for preparing the fluorinated polyaromatic polymer comprising one or more linear units comprising at least one fluorinated unit FU, at least one cationic unit CU and optionally at least one bifunctional aromatic moiety BA, comprising the steps of reacting the at least one fluorinate unit precursor FUP, the at least one cationic unit precursor CUP and optionally the at least one bifunctional moiety precursor BAP forming a piperidine-functionalised and/or halogen functionalised intermediate fluorinated polyaromatic polymer, polymerisation, forming a polymer membrane and forming an anion exchange membrane.

The third aspect of the invention relates to a method for preparing a fluorinated polyaromatic polymer comprising a branched unit BU comprising three or more linear units LU connected through a branching unit reagent BUR, comprising reacting at least one fluorinated unit precursor FUP and at least one cationic unit precursor CUP and optionally at least one bifunctional aromatic moiety precursor BAP and a branching unit precursor BUP.

In certain embodiments the method for preparing a fluorinated polyaromatic polymer comprising a branched unit BU comprising three or more linear units LU connected through a branching unit precursor BUP, comprising the steps of reacting at least one fluorinated unit precursor FUP and at least one cationic unit precursor CUP and optionally at least one bifunctional aromatic moiety precursor BAP and at least one branching unit precursor BUP forming a piperidine-functionalised intermediate fluorinated polyaromatic polymer and/or halogen functionalised intermediate fluorinated polyaromatic polymer, alkylation of the piperidine-functionalised intermediate fluorinated polyaromatic polymer and/or amination of the halogen functionalised intermediate fluorinated polyaromatic polymer, polymerisation, forming a polymer membrane and forming an anion exchange membrane.

The fourth aspect of the invention relates to a method for preparing a fluorinated polyaromatic polymer comprising a crosslinking unit CLU comprising two or more linear units LU connected through one or more crosslinkers CL comprising

- reacting at least one fluorinated unit precursor FUP and at least one cationic unit precursor CUP and optionally at least one bifunctional aromatic moiety precursor BAP yielding an intermediate polymer, and
- reacting the intermediate polymer with at least one crosslinking unit precursor CLUP.

In certain embodiments, the method for preparing a fluorinated polyaromatic polymer comprising a crosslinking unit CLU further comprising the steps of forming a polymer solution, forming a polymer membrane and forming an anion exchange membrane.

In certain embodiments, the fluorinated unit precursor FUP is selected from

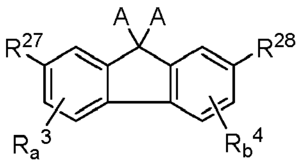
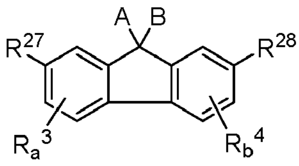
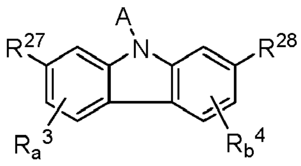

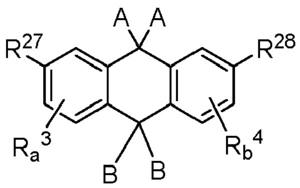
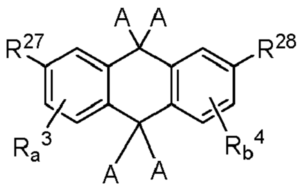
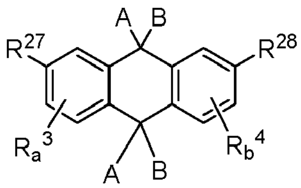

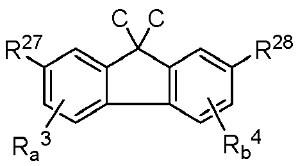
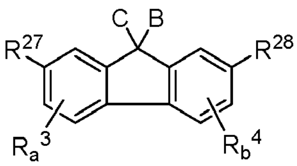

wherein

A is independently selected from $-(CH_2)_p-(CF_2)_q-CF_3$,
B, $R^3$, $R^4$, $R^{27}$ and $R^{28}$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

C is independently selected from

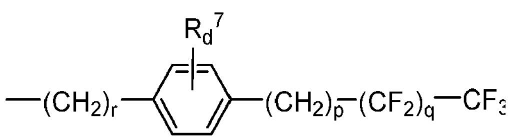

wherein $R^7$ is independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

d is 0, 1, 2, 3 or 4,
r is 0, 1 or 2,

p is independently between 1 and 20, particularly 1 and 15, more particularly 1 and 9, and
q is independently between 0 and 20, particularly 0 and 15, more particularly 0 and 9,

a and b are independently 0, 1, 2, or 3.

In certain embodiments, the fluorinated unit precursor FUP is selected from

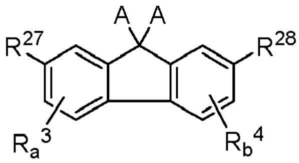
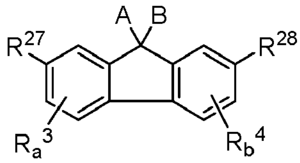
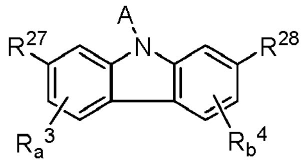

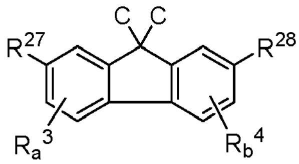
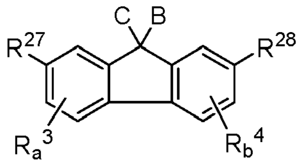

wherein

A is independently selected from $-(CH_2)_p-(CF_2)_q-CF_3$,
B, $R^3$, $R^4$, $R^{27}$ and $R^{28}$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

C is independently selected from

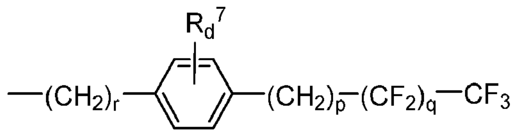

,

wherein $R_d^7$ is independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

d is 0, 1, 2, 3 or 4,
r is , 1, 2, 3, 4, 5 or 6, particularly 1, 2 or 3, more particularly 1 or 2,

p is independently between 1 and 20, particularly 1 and 15, more particularly 1 and 9, and
q is independently between 0 and 20, particularly 0 and 15, more particularly 0 and 9, a and b are independently 0, 1, 2, or 3.

In certain embodiments, the fluorinated unit precursor FUP is selected from

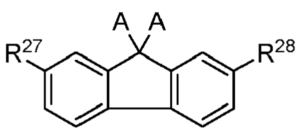
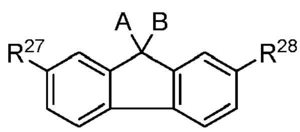
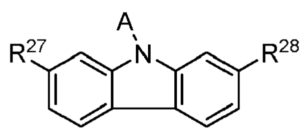

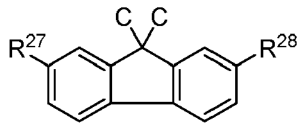 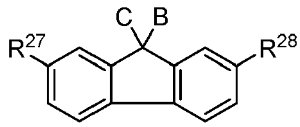

wherein

A is independently selected from $-(CH_2)_p-(CF_2)_q-CF_3$,
B, $R^{27}$ and $R^{28}$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

C is independently selected from

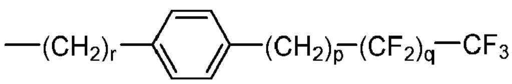

, wherein

p is independently between 1 and 20, particularly 1 and 15, more particularly 1 and 9, and
q is independently between 0 and 20, particularly 0 and 15, more particularly 0 and 9 r is , 1, 2, 3, 4, 5 or 6, particularly 1, 2 or 3, more particularly 1 or 2.

In certain embodiments, the fluorinated unit precursor FUP is selected from

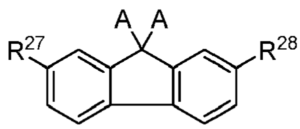 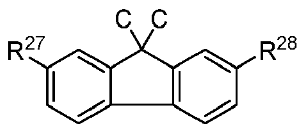

wherein

A is independently selected from $-(CH_2)_p-(CF_2)_q-CF_3$,
$R^{27}$ and $R^{28}$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

C is independently selected from

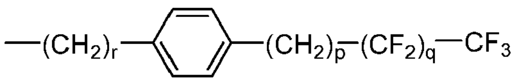

, wherein

r is , 1, 2, 3, 4, 5 or 6, particularly 1, 2 or 3, more particularly 1 or 2,
p is independently between 1 and 20, particularly 1 and 15, more particularly 1 and 9, and
q is independently between 0 and 20, particularly 0 and 15, more particularly 0 and 9.

In certain embodiments, $R^{27}$ and $R^{28}$ are selected from $-C^1-C^{10}$ alkyl, wherein the $-C^1-C^{10}$ alkyl is substituted or unsubstituted.

In certain embodiments, $R^{27}$ and $R^{28}$ are selected from $-C^1-C^6$ alkyl, wherein the $-C^1-C^6$ alkyl is substituted or unsubstituted.

In certain embodiments, $R^{27}$ and $R^{28}$ are selected from $-C^1-C^6$ alkyl, wherein the $-C^1-C^6$ alkyl is unsubstituted.

In certain embodiments, A is $-(CH_2)_p-(CF_2)_q-CF_3$ and C is

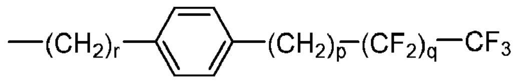

, wherein

r is , 1, 2, 3, 4, 5 or 6, particularly 1, 2 or 3, more particularly 1 or 2,
p is between 1 and 20, particularly 1 and 15, more particularly 1 and 9, and
q is between 0 and 20, particularly 0 and 15, more particularly 0 and 9.

In certain embodiments, the fluorinated unit precursor FUP is selected from

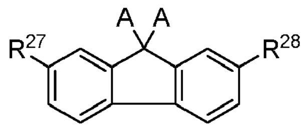

wherein

A is $-(CH_2)_p-(CF_2)_q-CF_3$ and
$R^{27}$ and $R^{28}$ are $-C^1-C^6$ alkyl, wherein the $-C^1-C^6$ alkyl is unsubstituted.

In certain embodiments, the cationic unit precursor CUP is selected from

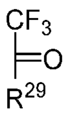 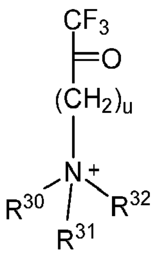 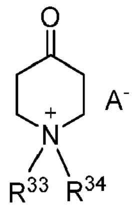 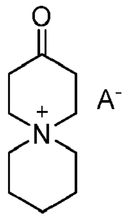 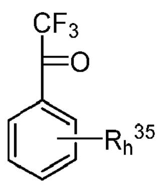

wherein

$R^{29}$, $R^{30}$, $R^{31}$, $R^{32}$, $R^{33}$, $R^{34}$ and $R^{35}$ are independently selected from

- H
- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

h is 0, 1, 2, 3, 4 or 5,

u is 0, 1, 2 or 3,

$A^-$ is an anion.

In certain embodiments, the cationic unit precursor CUP is selected from

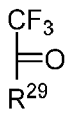

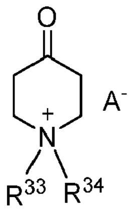

wherein

$R^{29}$, $R^{33}$ and $R^{34}$ are independently selected from

- H
- $-C_1$-$C_{10}$ alkyl, wherein the $-C_1$-$C_{10}$ alkyl is substituted or unsubstituted, particularly $-C_1$-$C_6$ alkyl,
- $-C_2$-$C_{10}$ alkenyl, wherein the $-C_2$-$C_{10}$ alkenyl is substituted or unsubstituted, particularly $-C_2$-$C_6$ alkenyl,
- $-C_2$-$C_{10}$ alkynyl, wherein the $-C_2$-$C_{10}$ alkynyl is substituted or unsubstituted, particularly $C_2$-$C_6$ alkynyl,

$A^-$ is an anion.

In certain embodiments, $R^{29}$, $R^{33}$ and $R^{34}$ are independently selected from

- H
- $-C_1$-$C_{10}$ alkyl, wherein the $-C_1$-$C_{10}$ alkyl is substituted or unsubstituted.

In certain embodiments, $R^{29}$, $R^{33}$ and $R^{34}$ are independently selected from

- H
- $-C_1$-$C_6$ alkyl, wherein the $-C_1$-$C_6$ alkyl is unsubstituted.

In certain embodiments, the bifunctional aromatic moiety precursor BAP is selected from

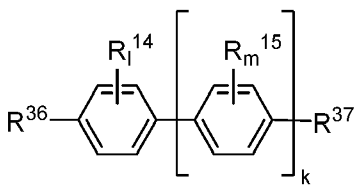

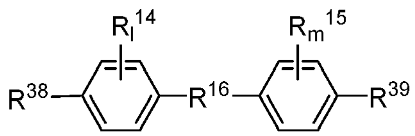

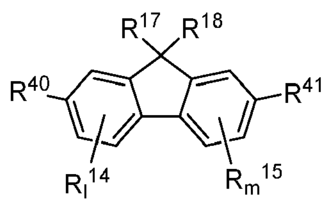

wherein

$R^{14}$, $R^{15}$, $R^{16}$, $R^{17}$, $R^{18}$, $R^{36}$, $R^{37}$, $R^{38}$, $R^{39}$, $R^{40}$ and $R^{41}$ are independently selected from

- $-C_1$-$C_{10}$ alkyl, wherein the $-C_1$-$C_{10}$ alkyl is substituted or unsubstituted, particularly $-C_1$-$C_6$ alkyl,
- $-C_2$-$C_{10}$ alkenyl, wherein the $-C_2$-$C_{10}$ alkenyl is substituted or unsubstituted, particularly $-C_2$-$C_6$ alkenyl,
- $-C_2$-$C_{10}$ alkynyl, wherein the $-C_2$-$C_{10}$ alkynyl is substituted or unsubstituted, particularly $C_2$-$C_6$ alkynyl,

l and m are 0, 1, 2, 3 or 4,

k is 0 to 4, particularly 1 to 4, more particularly 1 or 2.

In certain embodiments, the bifunctional aromatic moiety precursor BAP is selected from

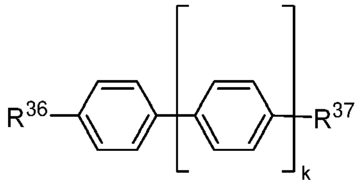 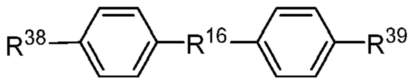 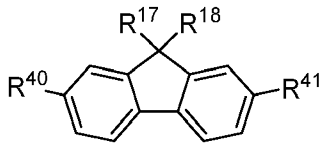

wherein

$R^{16}$, $R^{17}$, $R^{18}$, $R^{36}$, $R^{37}$, $R^{38}$, $R^{39}$, $R^{40}$ and $R^{41}$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

k is 0 to 4, particularly 1 to 4, more particularly 1 or 2.

In certain embodiments, the bifunctional aromatic moiety precursor BAP is selected from

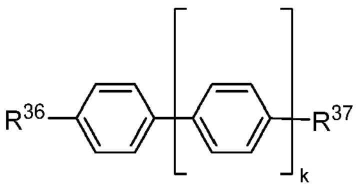 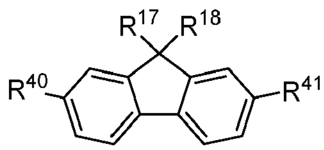

wherein

$R^{17}$, $R^{18}$, $R^{36}$, $R^{37}$, $R^{40}$ and $R^{41}$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

k is 0 to 4, particularly 1 to 4, more particularly 1 or 2.

In certain embodiments, $R^{17}$, $R^{18}$, $R^{36}$, $R^{37}$, $R^{40}$ and $R^{41}$ are independently selected from $-C_1-C_{10}$ alkyl, wherein the $-C_1-C_{10}$ alkyl is substituted or unsubstituted.

In certain embodiments, $R^{17}$ and $R^{18}$ are independently selected from $-C_1-C_6$ alkyl, wherein the $-C_1-C_6$ alkyl is substituted with a halogen or quaternary amine.

In certain embodiments, $R^{17}$ and $R^{18}$ are equally selected from $-C_1-C_6$ alkyl, wherein the $-C_1-C_6$ alkyl is substituted with a halogen or quaternary amine.

In certain embodiments, $R^{36}$, $R^{37}$, $R^{40}$ and $R^{41}$ are independently selected from $-C_1-C_6$ alkyl, wherein the $-C_1-C_6$ alkyl is unsubstituted.

In certain embodiments, the bifunctional aromatic moiety precursor BAP is selected from

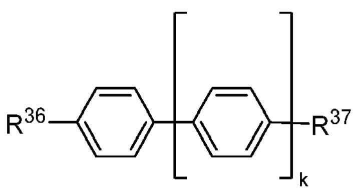

wherein

$R^{36}$ and $R^{37}$ are independently selected from $-C_1-C_6$ alkyl, wherein the $-C_1-C_6$ alkyl is unsubstituted.
k is 0 to 4, particularly 1 to 4, more particularly 1 or 2.

In certain embodiments, k is 2.

In certain embodiments the crosslinker CL is selected from

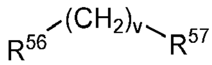

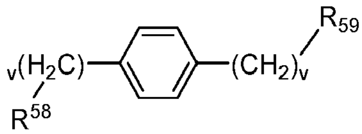

wherein

$R^{56}$, $R^{57}$, $R^{58}$ and $R^{59}$ are independently selected from

- the group of halogens,
- $-C_1$-$C_{10}$ alkyl, wherein the $-C_1$-$C_{10}$ alkyl is substituted or unsubstituted, particularly $-C_1$-$C_6$ alkyl,
- $-C_2$-$C_{10}$ alkenyl, wherein the $-C_2$-$C_{10}$ alkenyl is substituted or unsubstituted, particularly $-C_2$-$C_6$ alkenyl,
- $-C_2$-$C_{10}$ alkynyl, wherein the $-C_2$-$C_{10}$ alkynyl is substituted or unsubstituted, particularly $C_2$-$C_6$ alkynyl,

v is independently between 0 and 20.

In certain embodiments, $R^{56}$, $R^{57}$, $R^{58}$ and $R^{59}$ are independently selected from the group of halogens and $-C_1$-$C_{10}$ alkyl, wherein the $-C_1$-$C_{10}$ alkyl is substituted or unsubstituted.

In certain embodiments, $R^{56}$, $R^{57}$, $R^{58}$ and $R^{59}$ are independently selected from the group of halogens and $-C_1$-$C_6$ alkyl, wherein the $-C_1$-$C_6$ alkyl is substituted or unsubstituted.

In certain embodiments, $R^{56}$, $R^{57}$, $R^{58}$ and $R^{59}$ are independently selected from the group of halogens and $-C_1$-$C_6$ alkyl, wherein the $-C_1$-$C_6$ alkyl is unsubstituted.

In certain embodiments, the crosslinker CL is selected from

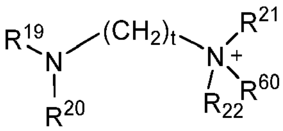

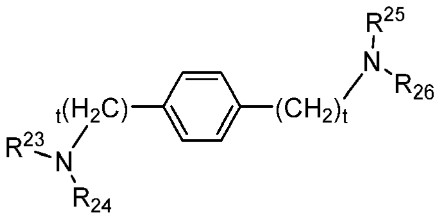

wherein

$R^{19}$, $R^{20}$, $R^{21}$, $R^{22}$, $R^{23}$, $R^{24}$, $R^{24}$, $R^{25}$, $R^{26}$ and $R^{60}$ are independently selected from

- H,
- $-C_1$-$C_{10}$ alkyl, wherein the $-C_1$-$C_{10}$ alkyl is substituted or unsubstituted, particularly $-C_1$-$C_6$ alkyl,
- $-C_2$-$C_{10}$ alkenyl, wherein the $-C_2$-$C_{10}$ alkenyl is substituted or unsubstituted, particularly $-C_2$-$C_6$ alkenyl,
- $-C_2$-$C_{10}$ alkynyl, wherein the $-C_2$-$C_{10}$ alkynyl is substituted or unsubstituted, particularly $C_2$-$C_6$ alkynyl,

t is independently between 0 and 20.

In certain embodiments, $R^{19}$, $R^{20}$, $R^{21}$, $R^{22}$, $R^{23}$, $R^{24}$, $R^{24}$, $R^{25}$, $R^{26}$ and $R^{60}$ are independently selected from H and $-C_1$-$C_{10}$ alkyl, wherein the $-C_1$-$C_{10}$ alkyl is substituted or unsubstituted.

In certain embodiments, $R^{19}$, $R^{20}$, $R^{21}$, $R^{22}$, $R^{23}$, $R^{24}$, $R^{24}$, $R^{25}$, $R^{26}$ and $R^{60}$ are independently selected from H and $-C_1$-$C_6$ alkyl, wherein the $-C_1$-$C_6$ alkyl is substituted or unsubstituted.

In certain embodiments, $R^{19}$, $R^{20}$, $R^{21}$, $R^{22}$, $R^{23}$, $R^{24}$, $R^{24}$, $R^{25}$, $R^{26}$ and $R^{60}$ are independently selected from H and $-C_1$-$C_6$ alkyl, wherein the $-C_1$-$C_6$ alkyl is unsubstituted.

The invention is further illustrated by the following examples and figures, from which further embodiments and advantages can be drawn. These examples are meant to illustrate the invention but not to limit its scope.

Description of the Figures

- Fig. 1 shows the alkaline stability test of PF10TP80 AEMs in 3 M KOH at 80°C; the bottom graph represents pristine; the x-axis unit is [ppm].
- Fig. 2 shows the oxidation stability test of PF10TP80 AEMs in 3% $H_2O_2$ at 25°C; the bottom graph represents pristine; the x-axis unit is [ppm].
- Fig. 3 shows the mechanical properties of PF10TP95 AEMs; the y-axis shows the tensile strength in [Mpa], the x-axis shows the elongation at break in [%].
- Fig. 4 shows the $OH^-$ conductivity of PF10TP95 AEMs; the y-axis shows the conductivity in [mS/cm], the x-axis shows the temperature in [°C].
- Fig. 5 shows the swelling ratio of PF10TP95 AEMs; the y-axis shows the swelling in [%], the x-axis shows the temperature in [°C].
- Fig. 6 shows the water uptake of PF10TP95 AEMs; the y-axis shows the water uptake in [%], the x-axis shows the temperature in [°C].
- Fig. 7 shows the structure of Nafion 117.
- Fig. 8 shows the structure of PAP-TP-X (X = 75-100).
- Fig. 9 shows the structures of prepared AEM examples listed in table 1.

Examples

General procedure

Step 1: Formation of a piperidine-functionalised and/or halogen functionalised intermediate fluorinated polyaromatic polymer

Preparation of $[FU\text{-}CU]_x$ structured fluorinated polyaromatic polymer

1 equivalent of FU and 1 equivalent of CU are dissolved in dichloromethane and stirred at 0 °C. Trifluoroacetic acid (1.5 equiv.) and trifluoromethanesulfonic acid (10 equiv.) were added. After the solution became viscous, the resulting gel was slowly poured into excessive water, forming a fiber. The fiber was further washed once with a 1 M KOH solution and washed three times with water. The piperidine-functionalized and/or halogen functionalised intermediate polymer is obtained after drying under vacuum at 120 °C overnight.

Preparation of a $[FU\text{-}CU]_x\text{-}[BA\text{-}CU]_y$ structured fluorinated polyaromatic polymer

0.1 to 0.2 equivalents FU, 0.8 to 0.9 equivalents BA and 1 to 1.1 equivalents CU are dissolved in dichloromethane and stirred at 0 °C. Trifluoroacetic acid (1.5 equiv.) and trifluoromethanesulfonic acid (10 equiv.) were added. After the solution became viscous, the resulting gel was slowly poured into excessive water, forming a fiber. The fiber was further washed once with a 1 M KOH solution and washed three times with water. The piperidine-functionalized and/or halogen functionalised intermediate polymer is obtained after drying under vacuum at 120 °C overnight.

Step 2: Formation of a polymer membrane

The piperidine-functionalized and/or halogen functionalised intermediate polymer intermediate polymer is suspended in dimethyl sulfoxide. CH3I (3 equiv. to CU) and K2CO3 (2 equiv. to CU) were added. The solution is stirred at room temperature in a dark environment for 1 d. The resulted viscous solution was precipitated from ethyl acetate, washed with water twice, and completely dried at 80 °C under vacuum yielding the piperidinium-functionalized and/or halogen functionalised polymer.

Step 3: Formation of an Anion Exchange membrane (AEM)

The piperidinium-functionalized and/or halogen functionalised polymer is dissolved in dimethyl sulfoxide, filtered through a 0.45 um PTFE filter and casted onto a glass plate. AEMs (in iodide form) is peeled off from the glass plate in contact with deionized water. AEMs in halogenate ion form are obtained by ion exchanging in 1 M salts solution at 80 °C. AEMs in hydroxide form is obtained by ion exchanging in 1 M KOH solution at 80 °C.

Example 1: Preparation of PF10TP80 Anion Exchange Membrane (AEM)

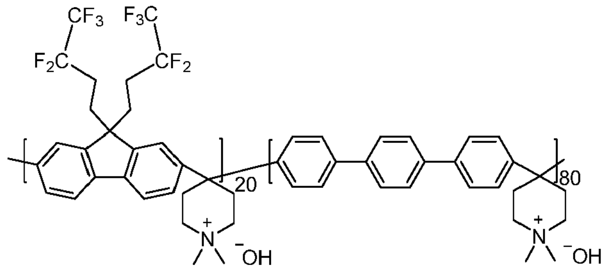

Step 1: p-terphenyl (0.8 equiv.), 9,9-bis(3,3,4,4,4-pentafluorobutyl)-9H-fluorene (0.2 equiv.), and 1-methyl-4-piperidone (1.1 equiv.) were dissolved into dichloromethane. The solution was stirred at 0 °C. Trifluoroacetic acid (1.5 equiv.) and trifluoromethanesulfonic acid (10 equiv.) were added. After the solution became viscous, the resulting dark blue gel was slowly poured into excessive water, forming a white fiber. The fiber was further washed once with a 1 M KOH solution and washed three times with water. The piperidine-functionalized intermediate polymer (yield 92%) was obtained after drying under vacuum at 120 °C overnight.

Step 2: The piperidine-functionalized intermediate polymer was suspended in dimethyl sulfoxide. $CH_3I$ (3 equiv. to piperidone group) and $K_2CO_3$ (2 equiv. to piperidone group) were added. The solution was stirred at room temperature in a dark environment for 1 d. The resulted viscous solution was precipitated from ethyl acetate, washed with water twice, and completely dried at 80 °C under vacuum. The yield of the piperidinium-functionalized polymer is around 100%.

Step 3: The piperidinium-functionalized polymer was dissolved in dimethyl sulfoxide, filtered through a 0.45 um PTFE filter and casted onto a glass plate. AEMs (in iodide form) were peeled off from the glass plate in contact with deionized water. AEMs in halogenate ion form were obtained by ion exchanging in 1 M salts solution at 80 °C. AEMs in hydroxide form was obtained by ion exchanging in 1 M KOH solution at 80 °C. The AEMs is noted as PF10TP80, where 10 refers to the number of fluorine in monomer and 80 refers to the ratio of terphenyl monomer.

Characterization: PF10TP80 AEM showed superior alkaline stability (>2000h in 3M KOH at 80 °C, Fig. 1). and oxidation stability (>1000h in Fenton solution (3wt% $H_2O_2$ and 4 ppm $Fe^{2+}$), Fig. 2). PF10TP80 AEM possessed excellent mechanical properties (tensile strength > 80 MPa and elongation at break > 35%), OH- conductivity (>150 mS/cm at 80 °C) and dimensional stability (swelling ratio <15%, water uptake < 90%).

Example 2: Preparation of PF26TP85 Anion Exchange Membrane (AEM)

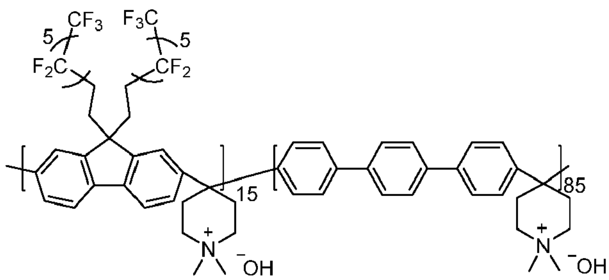

Step 1: p-terphenyl (0.85 equiv.), 9,9-bis(3,3,4,4,5,5,6,6,7,7,8,8,8-tridecafluorooctyl)-9H-fluorene (0.15 equiv.), and 1-methyl-4-piperidone (1.1 equiv.) were dissolved into dichloromethane. The solution was stirred at 0 °C. Trifluoroacetic acid (1.5 equiv.) and trifluoromethanesulfonic acid (10 equiv.) were added. After the solution became viscous, the resulting dark blue gel was slowly poured into excessive water, forming a white fiber. The fiber was further washed once with a 1 M KOH solution and washed three times with water. The piperidine-functionalized intermediate polymer (yield 91%) was obtained after drying under vacuum at 120 °C overnight.

Step 2: The piperidine-functionalized intermediate polymer was suspended in dimethyl sulfoxide. $CH_3I$ (3 equiv. to piperidone group) and $K_2CO_3$ (2 equiv. to piperidone group) were added. The solution was stirred at room temperature in a dark environment for 1day. The resulted viscous solution was precipitated from ethyl acetate, washed with water twice, and completely dried at 80 °C under vacuum. The yield of the piperidinium-functionalized polymer is around 100%.

Step 3: The piperidinium-functionalized polymer was dissolved in dimethyl sulfoxide, filtered through a 0.45 um PTFE filter and casted onto a glass plate. AEMs (in iodide form) were peeled off from the glass plate in contact with deionized water. AEMs in halogenate ion form were obtained by ion exchanging in 1 M salts solution at 80 °C. AEMs in hydroxide form was obtained by ion exchanging in 1 M KOH solution at 80 °C. The AEMs is noted as PF26TP85, where 26 refers to the number of fluorine in monomer and 85 refers to the ratio of terphenyl monomer.

Example 3: Preparation of PF42TP85 Anion Exchange Membrane (AEM)

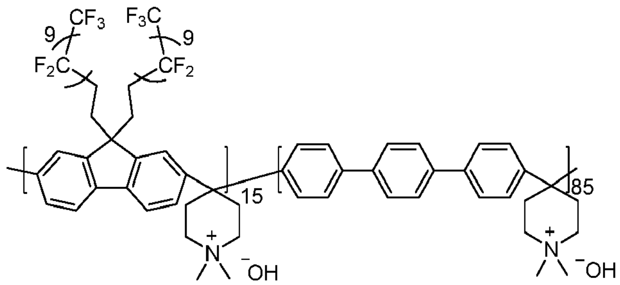

Step 1: p-terphenyl (0.85 equiv.), 9,9-bis(3,3,4,4,5,5,6,6,7,7,8,8,9,9,10,10,11,11,12,12,12-henicosafluorododecyl)-9H-fluorene (0.15 equiv.), and 1-methyl-4-piperidone (1.1 equiv.) were dissolved into dichloromethane. The solution was stirred at 0 °C. Trifluoroacetic acid (1.5 equiv.) and trifluoromethanesulfonic acid (10 equiv.) were added. After the solution became viscous, the resulting dark blue gel was slowly poured into excessive water, forming a white fiber. The fiber was further washed once with a 1 M KOH solution and washed three times with water. The piperidine-functionalized intermediate polymer (yield 91%) was obtained after drying under vacuum at 120 °C overnight.

Step 2: The piperidine-functionalized intermediate polymer was suspended in dimethyl sulfoxide. $CH_3I$ (3 equiv. to piperidone group) and $K_2CO_3$ (2 equiv. to piperidone group) were added. The solution was stirred at room temperature in a dark environment for 1day. The resulted viscous solution was precipitated from ethyl acetate, washed with water twice, and completely dried at 80 °C under vacuum. The yield of the piperidinium-functionalized polymer is around 100%.

Step 3: The piperidinium-functionalized polymer was dissolved in dimethyl sulfoxide, filtered through a 0.45 um PTFE filter and casted onto a glass plate. AEMs (in iodide form) were peeled off from the glass plate in contact with deionized water. AEMs in halogenate ion form were obtained by ion exchanging in 1 M salts solution at 80 °C. AEMs in hydroxide form was obtained by ion exchanging in 1 M KOH solution at 80 °C. The AEMs is noted as PF42TP85, where 42 refers to the number of fluorine in monomer and 85 refers to the ratio of terphenyl monomer.

Example 4: Preparation of PF10FA90 Anion Exchange Membrane (AEM)

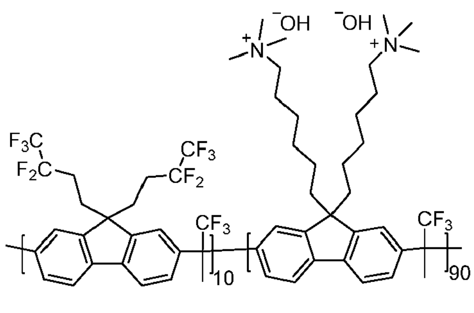

Step 1: 9,9-bis(6-bromohexyl)-9H-fluorene (0.9 equiv.), 9,9-bis(3,3,4,4,4-pentafluorobutyl)-9H-fluorene (0.1 equiv.), and 1,1,1-trifluoropropan-2-one (1.1 equiv.) were dissolved into dichloromethane. The solution was stirred at 0 °C. Trifluoroacetic acid (1.5 equiv.) and trifluoromethanesulfonic acid (10 equiv.) were added. After the solution became viscous, the resulting dark blue gel was slowly poured into excessive water, forming a white fiber. The fiber was further washed once with a 1 M KOH solution and washed three times with water. The bromine-functionalized intermediate polymer (yield 93%) was obtained after drying under vacuum at 120 °C overnight.

Step 2: The bromine-functionalized intermediate polymer was dissolved in tetrahydrofuran, filtered through a 0.45 um PTFE filter and casted onto a glass plate. The membrane was peeled off from the glass plate in contact with deionized water.

Step3: The membrane was immersed in excess 45% trimethylamine solution at room temperature in a dark environment for 2 day. The resulted AEMs was in bromine form. AEMs in halogenate ion form were obtained by ion exchanging in 1 M salts solution at 80 °C. AEMs in hydroxide form was obtained by ion exchanging in 1 M KOH solution at 80 °C. The AEMs is noted as PF10FA90, where 10 refers to the number of fluorine in monomer and 90 refers to the ratio of 9,9-bis(6-bromohexyl)-9H-fluorene monomer.

Example 5: Preparation of PF26BP90 Anion Exchange Membrane (AEM)

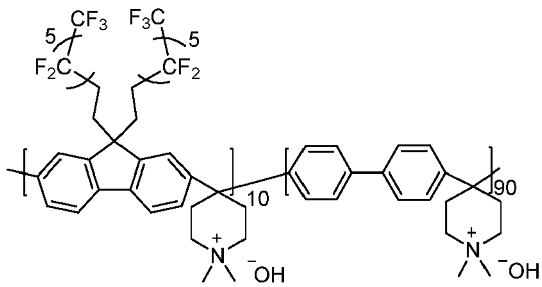

Step 1: biphenyl (0.9 equiv.), 9,9-bis(3,3,4,4,5,5,6,6,7,7,8,8,8-tridecafluorooctyl)-9H-fluorene (0.1 equiv.), and 1-methyl-4-piperidone (1.1 equiv.) were dissolved into dichloromethane. The solution was stirred at 0 °C. Trifluoroacetic acid (1.5 equiv.) and trifluoromethanesulfonic acid (10 equiv.) were added. After the solution became viscous, the resulting dark blue gel was slowly poured into excessive water, forming a white fiber. The fiber was further washed once with a 1 M KOH solution and washed three times with water. The piperidine-functionalized intermediate polymer (yield 91%) was obtained after drying under vacuum at 120 °C overnight.

Step 2: The piperidine-functionalized intermediate polymer was suspended in dimethyl sulfoxide. $CH_3I$ (3 equiv. to piperidone group) and $K_2CO_3$ (2 equiv. to piperidone group) were added. The solution was stirred at room temperature in a dark environment for 1day. The resulted viscous solution was precipitated from ethyl acetate, washed with water twice, and completely dried at 80 °C under vacuum. The yield of the piperidinium-functionalized polymer is around 100%.

Step 3: The piperidinium-functionalized polymer was dissolved in dimethyl sulfoxide, filtered through a 0.45 um PTFE filter and casted onto a glass plate. AEMs (in iodide form) were peeled off from the glass plate in contact with deionized water. AEMs in halogenate ion form were obtained by ion exchanging in 1 M salts solution at 80 °C. AEMs in hydroxide form was obtained by ion exchanging in 1 M KOH solution at 80 °C. The AEMs is noted as PF26BP90, where 26 refers to the number of fluorine in monomer and 90 refers to the ratio of biphenyl monomer.

Example 6: Preparation of PF6TP90 Anion Exchange Membrane (AEM)

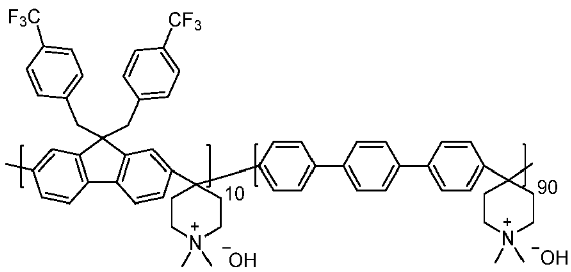

Step 1: p-terphenyl (0.9 equiv.), 9,9-bis(4-(trifluoromethyl)benzyl)-9H-fluorene, and 1-methyl-4-piperidone (1.1 equiv.) were dissolved into dichloromethane. The solution was stirred at 0 °C. Trifluoroacetic acid (1.5 equiv.) and trifluoromethanesulfonic acid (10 equiv.) were added. After the solution became viscous, the resulting dark blue gel was slowly poured into excessive water, forming a white fiber. The fiber was further washed once with a 1 M KOH solution

and washed three times with water. The piperidine-functionalized intermediate polymer (yield 91%) was obtained after drying under vacuum at 120 °C overnight.

Step 2: The piperidine-functionalized intermediate polymer was suspended in dimethyl sulfoxide. $CH_3I$ (3 equiv. to piperidone group) and $K_2CO_3$ (2 equiv. to piperidone group) were added. The solution was stirred at room temperature in a dark environment for 1 d. The resulted viscous solution was precipitated from ethyl acetate, washed with water twice, and completely dried at 80 °C under vacuum. The yield of the piperidinium-functionalized polymer is around 100%.

Step 3: The piperidinium-functionalized polymer was dissolved in dimethyl sulfoxide, filtered through a 0.45 um PTFE filter and casted onto a glass plate. AEMs (in iodide form) were peeled off from the glass plate in contact with deionized water. AEMs in halogenate ion form were obtained by ion exchanging in 1 M salts solution at 80 °C. AEMs in hydroxide form was obtained by ion exchanging in 1 M KOH solution at 80 °C. The AEMs is noted as PF6TP90, where 6 refers to the number of fluorine in monomer and 90 refers to the ratio of terphenyl monomer.

*Fluorine content and Ion Exchange Capacity (IEC) of the different fluorinated polyaromatic polymers*

Table 1: Ion Exchange Capacity and fluorine content for the state of the art AEM PAP-TP-X and the herein reported fluorinated polyaromatic polymers

| **Membrane** | **IEC (mmol/g)** | **Fluorine weight percentage** |
|---|---|---|
| Nafion 117 | 0.97 | 67.6 % |
| PAP-TP-X (X = 75-100)[1] | 2.37 | 2.4 % |
| PF10TP80 | 2.48 | 9.4 % |
| PF10TP85 | 2.56 | 7.3 % |
| PF10TP90 | 2.63 | 5% |
| PF10TP95 | 2.71 | 2.6 % |
| PF26TP85 | 2.22 | 16.4 % |
| PF26TP90 | 2.38 | 11.8 % |
| PF26TP95 | 2.57 | 6.4 % |
| PF42TP85 | 1.96 | 23.4 % |
| PF42TP90 | 2.17 | 17.4 % |
| PF42TP95 | 2.45 | 9.8 % |
| PF26BP90 | 2.84 | 14 % |

Nafion 117 is a known proton exchange membrane with high fluorine content, showing that a high fluorine content can show good performance for proton exchange membranes.

The state-of-the-art fluorinated anion exchange membrane PAP-TP-X has a rather low fluorine content of 2.4% but shows a good ion exchange capacity IEC (2.37 mmol/g) as hydroxide exchange membrane.

The fluorinated anion exchange membranes of the present invention show that the fluorine content can be significantly increased, compared to PAP-TP-X, to above 5% and up to 23 % while the ion exchange capacity IEC remains on a high level (1.96 mmol/g) or is even increased up to 2.84 mmol/g (Table 1).

*Measurement of alkaline and oxidation stability*

Alkaline stability of model FPAP membrane was tested by immersing into 3M KOH at 80 $^{c}$o. over 2000 h. Oxidation stability of model FPAP membrane was tested by immersing into Fenton reagent (3wt% $H_2O_2$ and 4 ppm $Fe^{2+}$) at room temperature. After certain treatment time, samples were taken out, rinsed with degassed deionized water, and ion-exchanged with 1M NaI into $I^-$ form. The structural changes were monitored by $^1H$ NMR spectra.

*Measurement of mechanical properties*

Mechanical properties of PAP and FPAP-x AEMs were measured by Universal Testing Machine (UTM; AGS-500NJ, Shimadzu, Tokyo, Japan) under ambient conditions with a 1 mm $min^{-1}$ strain rate.

*Measurement of conductivity*

Ion conductivity of PAP and FPAP-x AEMs in $OH^-$ form was tested by Autolab PGSTAT302N equipped with Scribner 740 MTS. Samples were cut into 10 mm x 30 mm size and ran with the alternative current (AC) impedance on a four-electrode cell with platinum electrodes from 1 Hz to 0.1 MHz. The assembly and measurement processes were operated under $N_2$ atmosphere to avoid $CO_2$ contamination. Impedance measurements were carried at different temperature and 100%RH.

*Measurement of water uptake and swelling ratio*

Water uptake (*WU*) and swelling ratio (SR) of PAP and FPAP-x AEMs can be calculated by:

$$WU(\%) = \frac{W_{wet} - W_{dry}}{W_{dry}} \times 100\%$$

$$SR(\%) = \frac{L_{wet} - L_{dry}}{L_{dry}} \times 100\%$$

where $W_{dry}$ and $L_{dry}$ were the weight and length of samples after drying in an oven at 80 °C under vacuum, $W_{wet}$ and $L_{wet}$ were the weight and length of samples after immersing in degassed deionized water for 12 h at different temperatures under $N_2$.

Cited prior art documents:

1. Yan, Y., Hu, K., Wang, J., et al., Poly (aryl piperidinium) polymers including those with stable cationic pendant groups for use as anion exchange membranes and ionomers; Patent application WO 2017/172824 A1.
2. Bae, C., Lee W., Polymers and methods for their manufacture; US Patent US 11236196 B2.
3. Wu, X., Chen, N., Klok, H. K., et al., Angew. Chem. Int. Ed., 2022, 61(7):e202114892.
4. Chen, N., Lu, C., Li, Y., et al., J. Membr. Sci., 2019, 588:117120.


All scientific publications and patent documents cited in the present specification are incorporated by reference herein.

**Claims**

**1.** A fluorinated polyaromatic polymer comprising

- at least one fluorinated unit FU of formula I

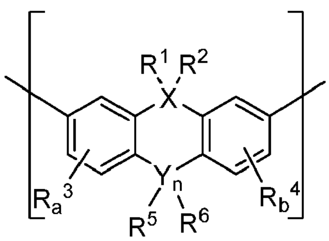

(I)

wherein

X is C or N,
Y is C,
$R^1$, $R^2$, $R^5$ and $R^6$ are independently selected from

- $-(CH_2)_p-(CF_2)_q-CF_3$,

- 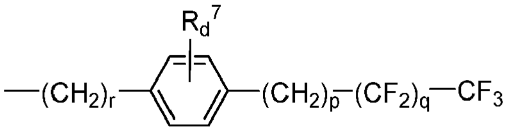,

- H,
- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

wherein at least one of $R^1$, $R^2$, $R^5$ and $R^6$ is

- $-(CH_2)_p-(CF_2)_q-CF_3$ or

- 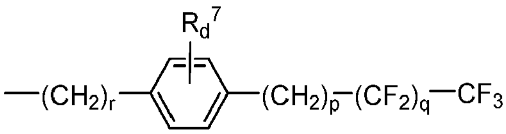,

$R_a{}^3$, $R_b{}^4$ and $R_d{}^7$ are independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

a and b are independently 0, 1, 2, or 3, particularly 0 or 1, more particularly 0,
d is 0, 1, 2, 3 or 4, particularly 0 or 1, more particularly 0,
n is 0 or 1,
r is , 1, 2, 3, 4, 5 or 6, particularly, 1, 2, or 3, more particularly 1 or 2,
p is independently between 1 and 20, particularly 1 and 15, more particularly 1 and 9, and
q is independently between 0 and 20, particularly 0 and 15, more particularly 0 and 9,

and
• at least one cationic unit CU of formula B or C

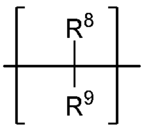 (B), 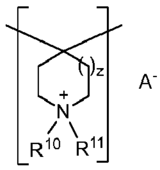 (C),

wherein

$R^8$ is a partially or fully fluorinated $C_1-C_6$ alkyl, particularly $CF_3$,
$R^9$ is selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,
- $-(CH_2)_s-N(R^{12})_2$,

- $-(CH_2)_s-NHR^{12}$,
- $-(CH_2)_s-N^+(R^{12})_3$,

wherein $R^{12}$ is independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

s is between 0 and 20

- $-Ph-R_f^{13}$,

$R^{10}$ and $R^{11}$ are independently selected from

- H
- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

or $R^{10}$ and $R^{11}$ are connected to each other to form a cycloalkyl comprising 4 to 10 C atoms,
z is 0 or 1,
$A^-$ is an anion.

**2.** The fluorinated polyaromatic polymer according to any of the preceding claims, comprising at least one bifunctional aromatic moiety BA, wherein the BA is independently selected from a moiety comprising 2 to 5, particularly 2 to 3 cyclic hydrocarbon moieties, wherein the BA is unsubstituted or substituted by one or more substituents independently selected from $-C_1-C_{10}$-alkyl, $-C_1-C_{10}$-alkenyl or $-C_1-C_{10}$-alkynyl, wherein the one or more substituent is unsubstituted or further substituted with one or more halogen atoms or one or more quaternary amines.

**3.** The fluorinated polyaromatic polymer according to any of the preceding claims, comprising at least one linear unit LU comprising

- the one or more FU and the one or more CU, and/or
- the one or more FU, the one or more CU and the one or more BA, particularly
- the one or more FU, the one or more CU and the one or more BA,

wherein the LU is arranged $[FU-CU]_x-[BA-CU]_y$,
wherein the ratio of x and y is 1:99 to 50:50.

**4.** The fluorinated polyaromatic polymer according to any of the preceding claims, wherein three or more linear units LU form at least one branched unit BU, wherein the three or more linear units LU are connected through at least one branching unit reagent BUR, wherein the at least one BUR is independently selected from a moiety comprising 3 to 6, cyclic hydrocarbon moieties.

**5.** The fluorinated polyaromatic polymer according to any of the preceding claims, wherein two or more linear units LU form at least one crosslinked unit CU, wherein the two or more linear units LU are crosslinked through at least one crosslinker CL, wherein the at least one crosslinker CL is independently selected from an aliphatic or aromatic quaternary diamine.

**6.** The fluorinated polyaromatic polymer according to any of the preceding claims, wherein the at least one fluorinated unit FU is independently selected from

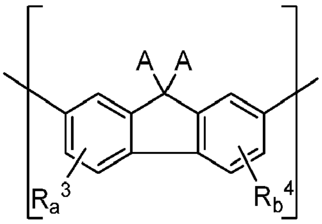
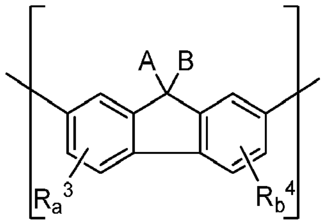
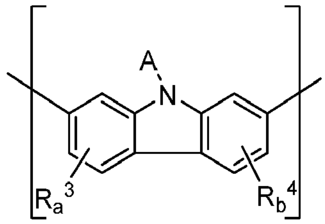

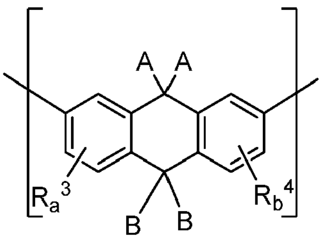
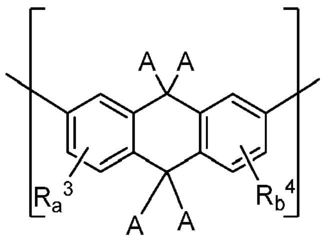
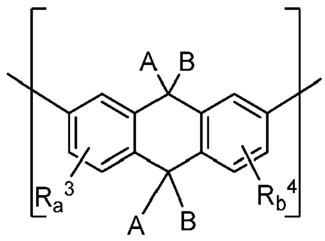

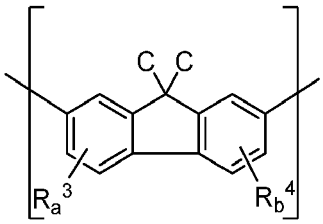
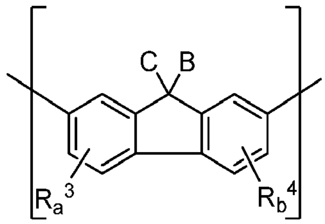

wherein

A is independently selected from $-(CH_2)_p-(CF_2)_q-CF_3$,
B, $R^3$ and $R^4$ are independently selected from -

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

C is independently selected from

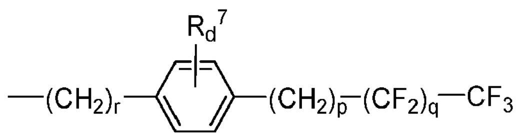

,

wherein $R_d^7$ is independently selected from

- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

d is 0, 1, 2, 3 or 4,
r is , 1, 2, 3, 4, 5 or 6, particularly 1, 2 or 3, more particularly 1 or 2,

p is independently between 1 and 20, particularly 1 and 15, more particularly 1 and 9, and
q is independently between 0 and 20, particularly 0 and 15, more particularly 0 and 9, a and b are independently 0, 1, 2, or 3.

**7.** The fluorinated polyaromatic polymer according to any of the preceding claims, wherein the at least one bifunctional aromatic moiety BA is independently selected from

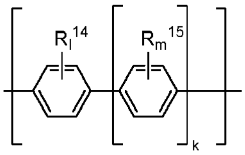 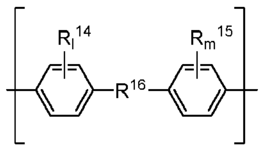 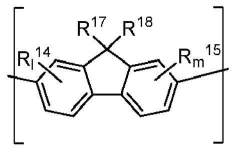

wherein

$R^{14}$, $R^{15}$, $R^{16}$, $R^{17}$ and $R^{18}$ are independently selected from

- $-C_1$-$C_{10}$ alkyl, wherein the $-C_1$-$C_{10}$ alkyl is substituted or unsubstituted, particularly $-C_1$-$C_6$ alkyl,
- $-C_2$-$C_{10}$ alkenyl, wherein the $-C_2$-$C_{10}$ alkenyl is substituted or unsubstituted, particularly $-C_2$-$C_6$ alkenyl,
- $-C_2$-$C_{10}$ alkynyl, wherein the $-C_2$-$C_{10}$ alkynyl is substituted or unsubstituted, particularly $C_2$-$C_6$ alkynyl,

l and m are independently 0, 1, 2, 3 or 4,
k is 0 to 4, particularly 1 to 4, more particularly 1 or 2.

**8.** The fluorinated polyaromatic polymer according to any of the preceding claims, wherein the at least one branching unit BU is independently selected from

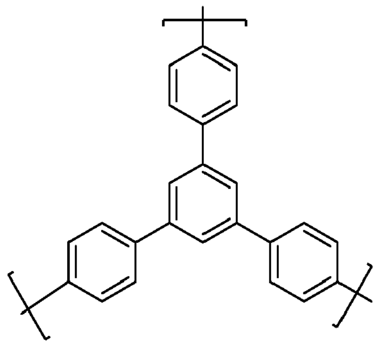 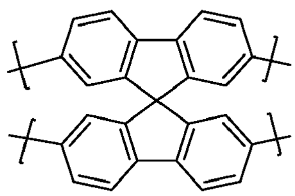

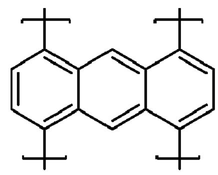 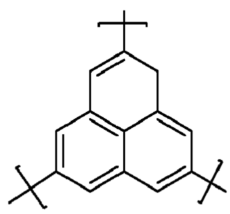

**9.** The fluorinated polyaromatic polymer according to any of the preceding claims, wherein the at least one crosslinking unit CLU is independently selected from

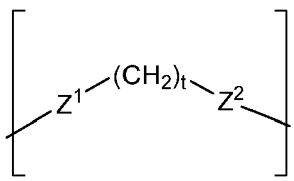 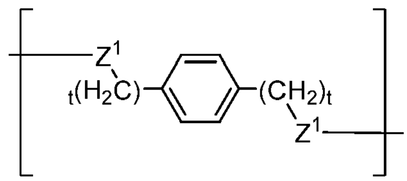

wherein

$Z^1$ is $R^{19}R^{20}$ or $NR^{21}R^{22}$,
$Z^2$ is $R^{19}R^{20}$ or $N^+R^{21}R^{22}R^{23}$

$R^{19}$ and $R^{20}$ are independently selected from

- the group of halogens
- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

$R^{21}$, $R^{22}$ and $R^{23}$ are independently selected from

- H
- $-C_1-C_{10}$ alkyl, wherein the $-C_1-C_{10}$ alkyl is substituted or unsubstituted, particularly $-C_1-C_6$ alkyl,
- $-C_2-C_{10}$ alkenyl, wherein the $-C_2-C_{10}$ alkenyl is substituted or unsubstituted, particularly $-C_2-C_6$ alkenyl,
- $-C_2-C_{10}$ alkynyl, wherein the $-C_2-C_{10}$ alkynyl is substituted or unsubstituted, particularly $C_2-C_6$ alkynyl,

t is between 0 and 20, particularly 0 to 12, more particularly 0 to 6.

**10.** The fluorinated polyaromatic polymer according to any of the preceding claims, wherein the fluorine content is 2.5% to 80%, particularly 5% to 60%, more particularly 5 to 30%.

**11.** A method for preparing a fluorinated polyaromatic polymer comprising one or more linear units LU comprising reacting at least one fluorinated unit precursor FUP and optionally at least one cationic unit precursor CUP and optionally at least one bifunctional aromatic moiety precursor BAP.

**12.** A method for preparing a fluorinated polyaromatic polymer comprising a branched unit BU comprising three or more linear units LU connected through a branching unit reagent BUR, comprising reacting at least one fluorinated unit precursor FUP and optionally at least one cationic unit precursor CUP and optionally at least one bifunctional aromatic moiety precursor BAP and a branching unit precursor BUP.

**13.** A method for preparing a fluorinated polyaromatic polymer comprising a crosslinking unit CU comprising two or more linear units LU connected through one or more crosslinkers CL comprising

• reacting at least one fluorinated unit precursor FUP and at least one cationic unit precursor CUP and optionally at least one bifunctional aromatic moiety precursor BAP yielding an intermediate polymer, and
• reacting the intermediate polymer with at least one crosslinking unit precursor CLU.

Fig. 1

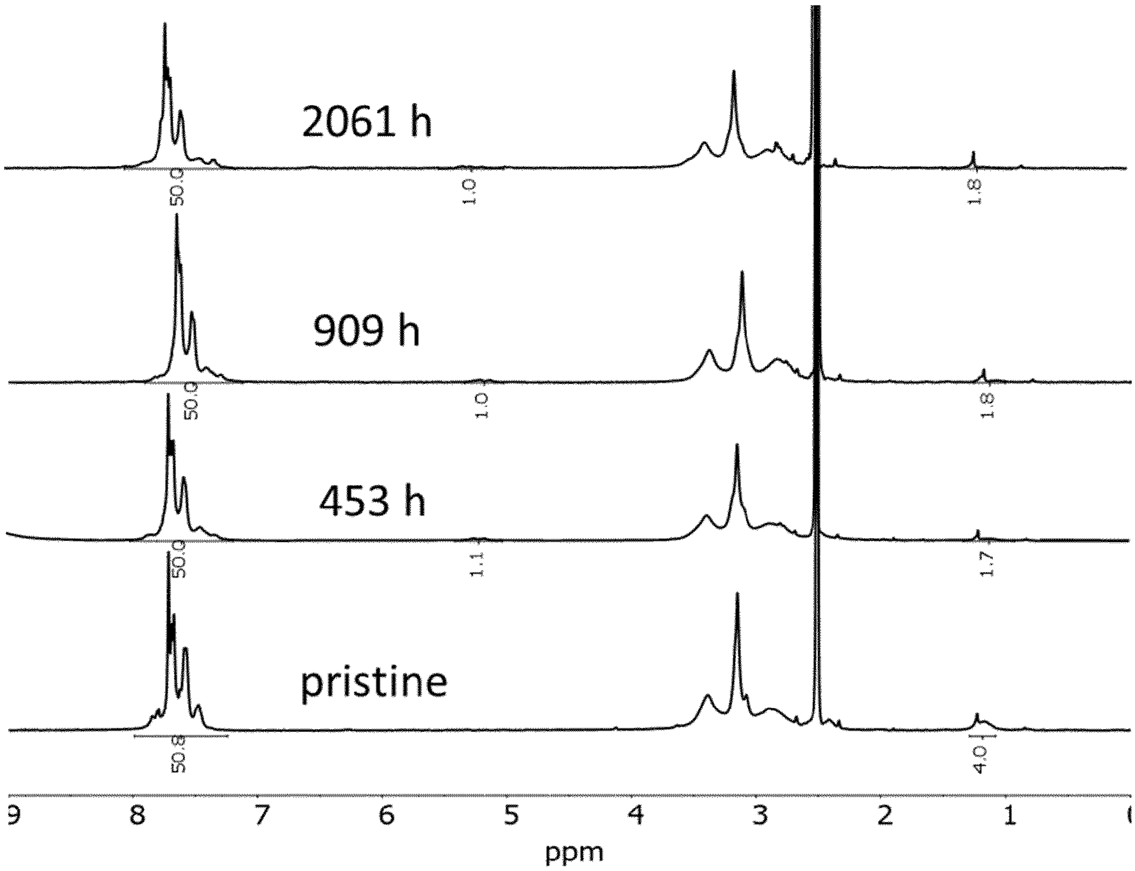
2061 h
50.0
1.0
1.8
909 h
50.0
1.0
1.8
453 h
50.0
1.1
1.7
pristine
50.8
4.0
9
8
7
6
5
4
3
2
1
ppm

Fig. 2

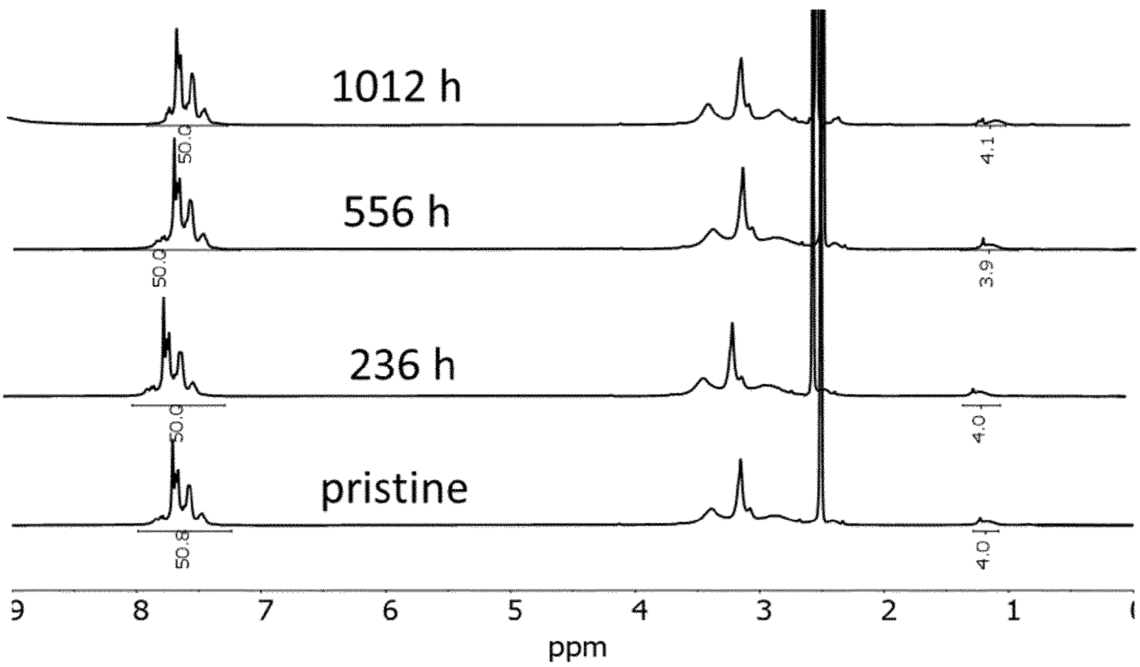
1012 h
50.0
4.1
556 h
50.0
3.9
236 h
50.0
4.0
pristine
50.8
4.0
9
8
7
6
5
4
3
2
1
ppm

Fig. 3

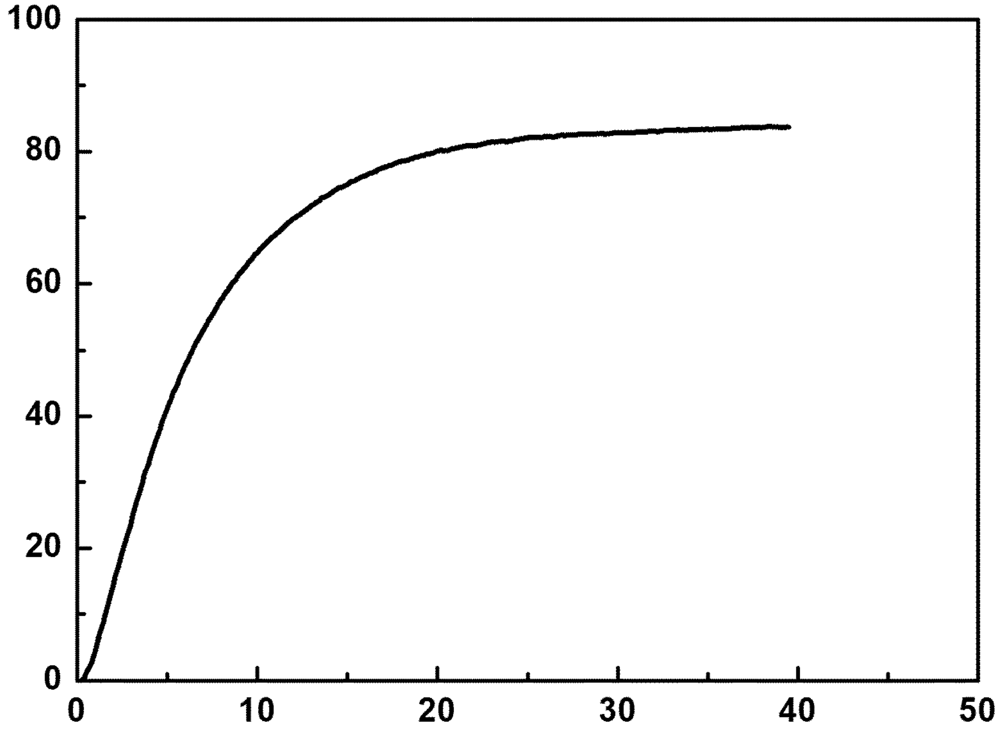
100
80
60
40
20
0
0
10
20
30
40
50

Fig. 4

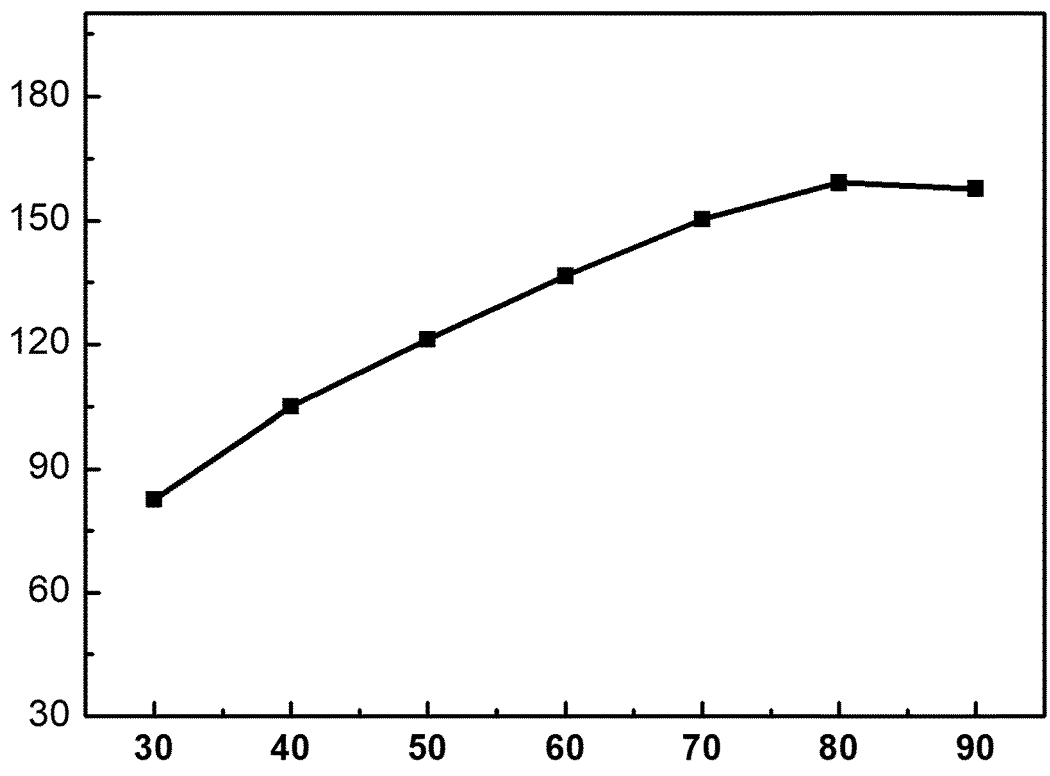
180
150
120
90
60
30
30
40
50
60
70
80
90

Fig. 5

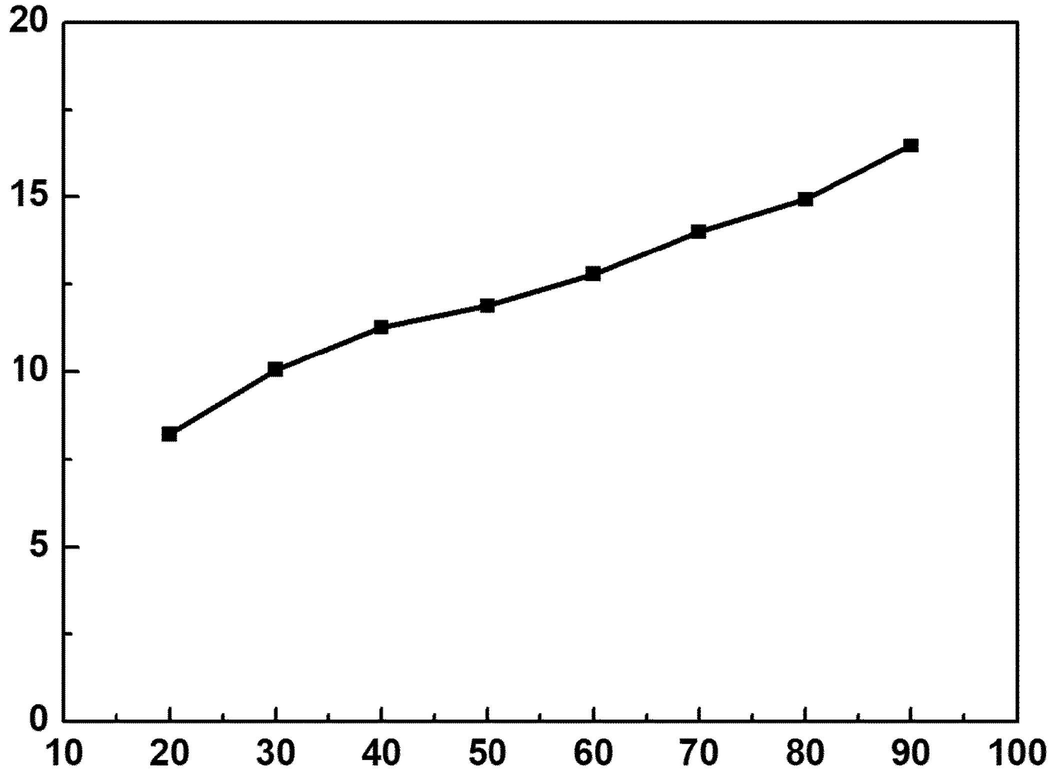
20
15
10
5
0
10
20
30
40
50
60
70
80
90
100

Fig. 6

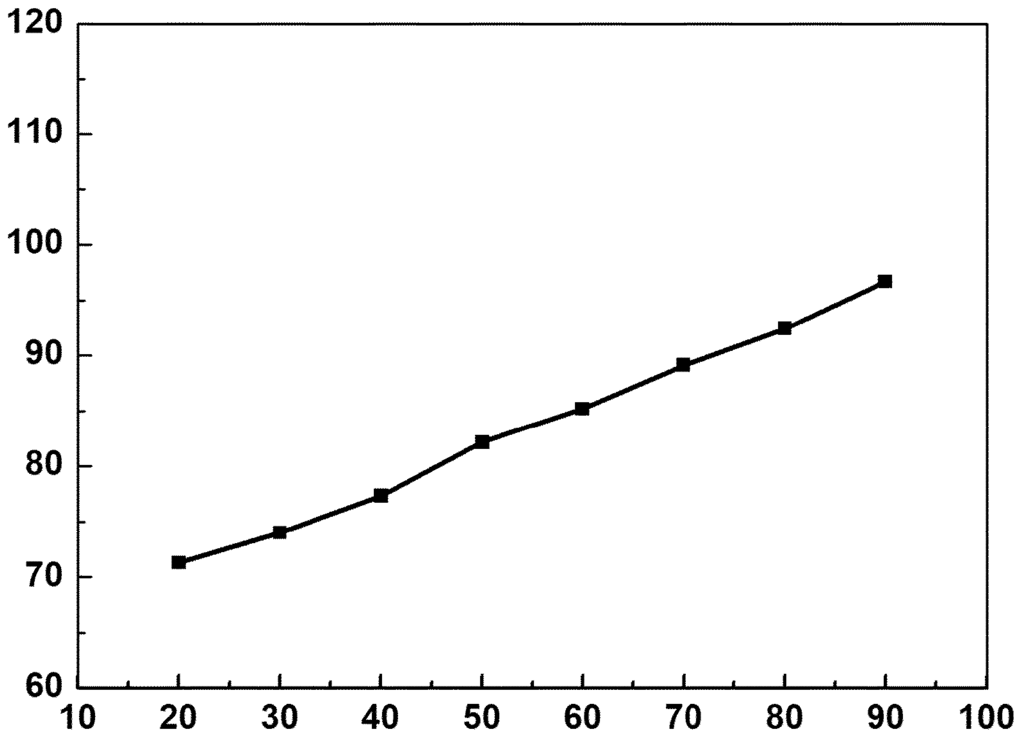
120
110
100
90
80
70
60
10
20
30
40
50
60
70
80
90
100

Fig. 7

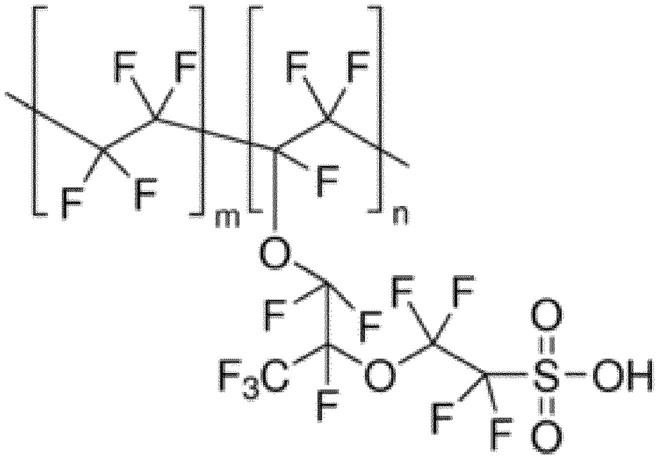

Fig. 8

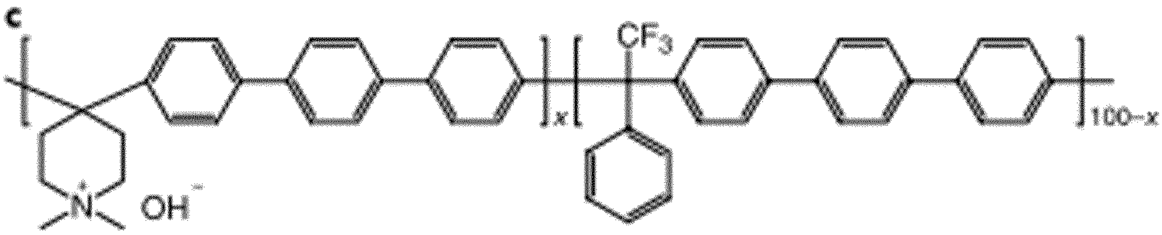

Fig. 9

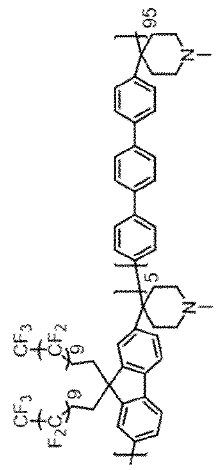

PF42TP95

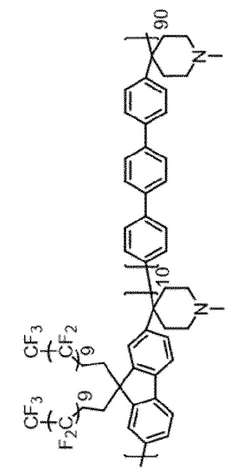

PF42TP90

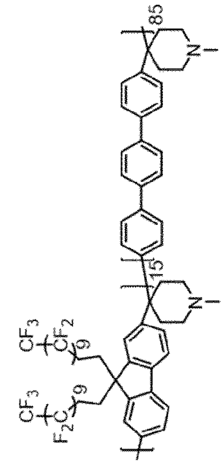

PF42TP85

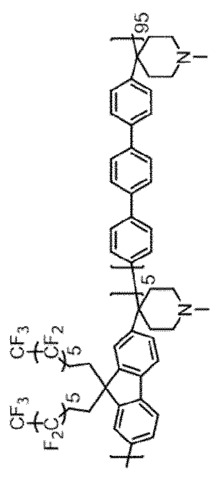

PF26TP95

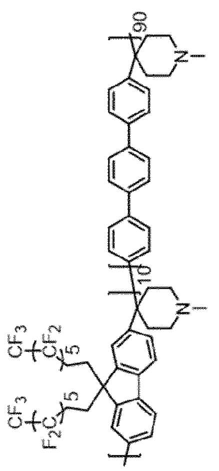

PF26TP90

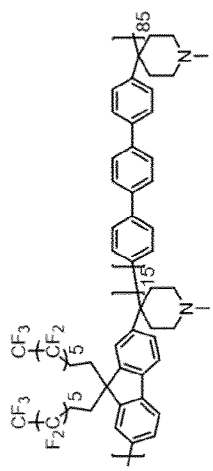

PF26TP85

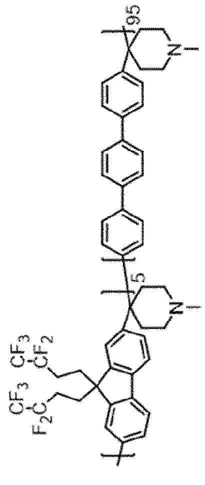

PF10TP95

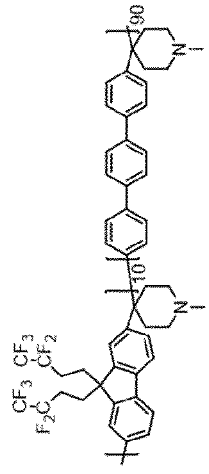

PF10TP90

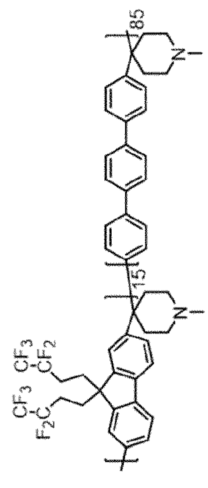

PF10TP85

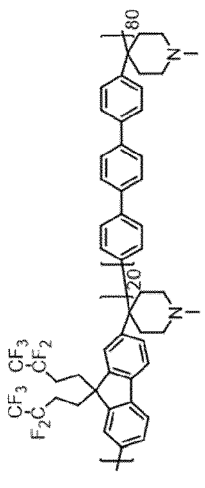

PF10TP80

Europäisches Patentamt
European Patent Office
Office européen des brevets

# EUROPEAN SEARCH REPORT

Application Number
EP 22 20 5637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAI LEI ET AL: "Branched, Side-Chain Grafted Polyarylpiperidine Anion Exchange Membranes for Fuel Cell Application", ACS APPLIED ENERGY MATERIALS, [Online] vol. 4, no. 7, 26 July 2021 (2021-07-26), pages 6957-6967, XP055904072, ISSN: 2574-0962, DOI: 10.1021/acsaem.1c01037 Retrieved from the Internet: URL:https://pubs.acs.org/doi/pdf/10.1021/acsaem.1c01037> [retrieved on 2023-05-08] | 11-13 | INV. C08G10/00 C08J5/22 |
| A | * figure 1b * * left column, third full paragraph; page 9 * * abstract * ----- | 1-10 | |
| X | CHEN NANJUN ET AL: "Poly(fluorenyl aryl piperidinium) membranes and ionomers for anion exchange membrane fuel cells", NATURE COMMUNICATIONS, [Online] vol. 12, no. 1, 22 April 2021 (2021-04-22), XP055940480, DOI: 10.1038/s41467-021-22612-3 Retrieved from the Internet: URL:http://www.nature.com/articles/s41467-021-22612-3> [retrieved on 2023-05-08] | 11-13 | TECHNICAL FIELDS SEARCHED (IPC): C08G C08J |
| A | * Scheme 2 * * Scheme 3 * * abstract * ----- | 1-10 | |

The present search report has been drawn up for all claims

1

| Place of search | Date of completion of the search | Examiner |
|---|---|---|
| Munich | 9 May 2023 | Laudi, Ines |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017172824 A1, Yan
- US 11236196 B2, Bae

### Non-patent literature cited in the description


- **WU, X. ; CHEN, N. ; KLOK, H. K. et al.** *Angew. Chem. Int. Ed.,* 2022, vol. 61 (7), e202114892
- **CHEN, N. ; LU, C. ; LI, Y. et al.** *J. Membr. Sci.,* 2019, vol. 588, 117120